# EUROPEAN PATENT APPLICATION

(11) **EP 2 930 592 A1**
(43) Date of publication of application: **14.10.2015**
(21) Application number: 15159523.8
(22) Date of filing: 17.03.2015
(51) Int. Cl.: G06F 3/01

(54) **ALREADY-READ DETERMINATION APPARATUS, ALREADY-READ DETERMINATION METHOD AND ALREADY-READ DETERMINATION PROGRAM**

(30) Priority: 09.04.2014 JP 2014080502
(71) Applicant: FUJITSU LIMITED, Kawasaki-shi, Kanagawa 211-8588 (JP)
(72) Inventor: Mohanakrishnan, Jaikrishna, Kawasaki-shi, Kanagawa 211-8588 (JP); Taguchi, Akinori, Kawasaki-shi, Kanagawa 211-8588 (JP)
(74) Representative: Wilding, Frances Ward

(57) **Abstract**

An already-read determination apparatus includes a read time prediction unit configured to set predictive read time of a quoted portion in a document and predictive read time of a non-quoted portion in the document on the basis of an information quantity of the quoted portion and an information quantity of a non-quoted portion respectively, a reference time measuring unit configured to measure periods of reference time for which a user refers to the quoted portion and the non-quoted portion respectively, and a determining unit configured to determine that the document is read by the user when the predictive read time of each portion and the reference time satisfy predetermined conditions.

## Description

### FIELD

The embodiments discussed herein are related to an already-read determination apparatus, an already-read determination method and an already-read determination program.

### BACKGROUND

A variety of documents are dealt with as digital data at the present. A real life has frequent opportunities to read the documents such as Web information, e-mails, SNS (Social Networking Service) information and e-books. These documents include some documents, which will become convenient with verified indications of their being already read. If these documents are left unread, it may happen that a smooth communication is not established as the case may be. Avoidance of such a problem requests a function of determining whether the document is read or not.

Known hitherto are a method of setting, on the occasion of performing an operation to open a mail, this mail as being already read, and a method of determining a degree of how much the mail is read from display time of the mail. Another method is also known, which determines, when a period of time of looking at a general document without being limited to the mail exceeds a period of time taken for comprehending contents of the document, that this document will have been read. In addition to these methods, a method is proposed, which makes a determination about reading a document by use of a line-of-sight detection technology (refer to, e.g., Patent documents 1 - 5).
[Patent document 1] Japanese Laid-Open Patent Publication No. 2006-235722
[Patent document 2] Japanese Laid-Open Patent Publication No. 2010-39646
[Patent document 3] Japanese Laid-Open Patent Publication No. 2006-107048
[Patent document 4] Japanese Laid-Open Patent Publication No. 11-24549
[Patent document 5] Japanese Laid-Open Patent Publication No. 2000-207302

### SUMMARY

I n the case of determining whether the document is read or not, the prior arts are based on, e.g., a premise that respective regions within the document are read in the same way at the same speed throughout. When a user actually reads the document, however, the user takes a different reading way depending on a region as the case may be. For instance, a text read by the user in the past can be read in a shorter period of time than reading a text not yet being read. Hence, if based on the premise that the respective regions contained in the document are read in the same way, an erroneous determination of not yet being read will occur in some cases even though the user actually has read the document.

It is desirable to provide an already-read determination apparatus, an already-read determination method and an already-read determination program, which are capable of reducing the erroneous determination when determining whether the document is read or not.

An embodiment of one aspect of the invention is exemplified by an already-read determination apparatus. The present already-read determination apparatus includes a read time prediction unit configured to set predictive read time of a quoted portion in a document and predictive read time of a non-quoted portion in the document on the basis of an information quantity of the quoted portion and an information quantity of a non-quoted portion respectively, a reference time measuring unit configured to measure periods of reference time for which a user refers to the quoted portion and the non-quoted portion respectively, and a determining unit configured to determine that the document is read by the user when the predictive read time of each portion and the reference time satisfy predetermined conditions.

An embodiment of another aspect of the invention is given by way of an already-read determination method by which the already-read determination apparatus executes the processes described above.

An embodiment of another aspect of the invention is exemplified by way of an already-read determination program to make a computer function as the already-read determination apparatus described above, and can include a non-transitory computer readable recording medium recorded with the already-read determination program. The non-transitory computer readable recording medium connotes a recording medium, which can be read from the computer, etc., the recording medium being capable of accumulating information such as data and programs electrically, magnetically, optically, mechanically or by chemical action.

### BRIEF DESCRIPTION OF THE DRAWINGS

FIG. 1 is a diagram illustrating an example in which a mail text is classified into an already-read region and an unread region based on existence or non-existence of a quoted symbol;
FIG. 2 is a diagram illustrating one example of a hardware configuration of an already-read determination apparatus;
FIG. 3 is a diagram illustrating one example of blocks to execute processes of the already-read determination apparatus;
FIG. 4 is a diagram illustrating one example of a flowchart of processes of classifying a document into an already-read region and an unread region;
FIG. 5 is a diagram illustrating one example of a flowchart of processes of setting determination criteria in respective classified regions and determining whether the document is read or not;
FIG. 6 is a diagram illustrating one example of a flowchart of processes of predicting read time of each region;
FIG. 7 is a diagram illustrating one example of a flowchart of processes of measuring reference time of a reading target region;
FIG. 8A is a diagram illustrating one example of a flowchart of processes of determining that a whole document is already read when each region is an already-read region and notifying of a result of a document already-read determination;
FIG. 8B is a diagram illustrating one example of a flowchart of processes of determining that the whole document is already read when a ratio of the reference time to predictive read time of each region is equal to or larger than a threshold value, and notifying of a result of the document already-read determination;
FIG. 8C is a diagram illustrating one example of a flowchart of processes of determining that the whole document is already read when each of the regions is already read, and notifying of a result of the already-read determination per region and a result of the already-read determination about the whole document;
FIG. 9 is a diagram illustrating an example of classifying a mail text into a plurality of regions by taking account of a mail sender;
FIG. 10 is a diagram illustrating one example of a flowchart of processes of setting the determination criterion taking account of the sender for each of the classified regions, and determining whether the document is already read or not;
FIG. 11 is a diagram illustrating an example in which the unread region next to the already-read region is a short region in the mail text;
FIG. 12 is a diagram illustrating one example of a flowchart of processes of setting the determination criterion taking account of such a case that the unread region next to the already-read region is a short region, and determining whether the document is already read or not;
FIG. 13 is a diagram illustrating an example of classifying the mail text into a plurality of regions by taking account of quoted counts;
FIG. 14 is a diagram illustrating one example of a flowchart of processes of setting the determination criteria taking account of the quoted counts in the classified regions, and determining whether the document is already read or not;
FIG. 15 is a diagram illustrating an example of classifying the mail text into the unread region and a forwarded region;
FIG. 16 is a diagram illustrating one example of a flowchart of processes of setting, for each of the classified regions, the determination criterion taking account of whether the forwarded region is the already-read region or not, and determining whether the document is already read or not;
FIG. 17 is a diagram depicting an example of classifying the mail text into a text region and a URL region;
FIG. 18 is a diagram illustrating one example of a flowchart of processes of setting the determination criterion taking account of whether the region is the URL region or not for each of the classified regions, and determining whether the document is already read or not;
FIG. 19 is a diagram illustrating one example of a flowchart of processes of determining whether another unread mail related to the already-read mail is already read or not; and
FIG. 20 is a diagram illustrating one example of a flowchart of processes of the already-read determination apparatus 10.

### DESCRIPTION OF EMBODIMENTS

An embodiment of the present invention will hereinafter be described, by way of example only, with reference to the drawings. A configuration of the following embodiment is an exemplification, and the present invention is not limited to the configuration of the embodiment. Respective Examples encompassed by the present embodiment will exemplify processes of an already-read determination apparatus 10. The already-read determination apparatus 10 in the embodiment determines whether a determination target document is read by a user or not.

### [Example 1]

An assumption in the Example 1 is that the determination target document is a mail received by the user. Further, the already-read determination apparatus 10 is to be capable of processing the mail document in a way that segments the document into a plurality of regions. For example, each mail to be transmitted and received includes a region containing a question, a query, a request, etc., which are made and transmitted by the user himself or herself, the region being already read by the user (which will hereinafter be referred to as an already-read region), and a region containing an answer to the question of the user, the regions being unread so far by the user (which will hereinafter be referred to as an unread region). On this occasion, information of the already-read region is acquired from memory in the past and can be therefore read in a shorter period of time than reading the unread region. For example, a character count (which will hereinafter be also termed a reading speed) being readable per unit time is set as a determination criterion, in which case the already-read determination apparatus 10 sets for the already-read region a reading speed higher than the reading speed of the unread region as the determination criterion. Therefore, read time of the already-read region, which is predicted based on the determination criterion and an information quantity, becomes shorter than a period of predictive read time of the unread region. The already-read determination apparatus 10 predicts a different period of read time between the already-read region and the unread region, and is thereby capable of determining more precisely whether the whole document is already read or not.

Note that the determination as to whether the region is the already-read region or the unread region can be made by a variety of methods. For instance, the regions being determined as the already-read regions in the past are compiled into a database, and a region, if identical with any one of the regions stored in the database, can be determined to be the already-read region. Further, contents of regions being inputted by the user by way of a keyboard input, a handwriting input, a voice input, etc. and contents of regions being deleted after the input, may also be compiled into the database as the already-read regions. The already-read region is one example of a quoted portion. Moreover, the unread region is one example of a non-quoted portion. The following embodiment encompassing the Example 1 includes a process that the already-read determination apparatus 10 determines, from a comparison between user's reference time to each region such as the already-read region or the unread region and the predictive read time, whether the user reads each region or not. In this process, the already-read determination apparatus 10 may determine whether the user reads the document or not by detecting an operation such as making a selection, doing a copy and clicking a link for the purpose of a search and a translation through the keyboard input, a mouse click, a touch operation in addition to the user's reference time to the already-read region or the unread region. Further, the already-read determination apparatus 10 may also measure the reference time the user gazes at a determination target region by detecting a line of sight of the user for a predetermined period of time. Known as a technology of detecting the line of sight is, herein, a technology of calculating the line of sight by illuminating a face with an Infrared LED (Light Emitting Diode), capturing an image of the face by an infrared camera and detecting a corneal reflex and a pupil from the image. Moreover, when the document is stored in a file, the already-read determination apparatus 10 may set a period of time for which the file remains opened as the reference time. Still further, the already-read determination apparatus 10 may also set a period of time for which each portion of the document is scroll-displayed as the reference time. Note that the document serving as a target for an already-read determination may be a medium such as paper.

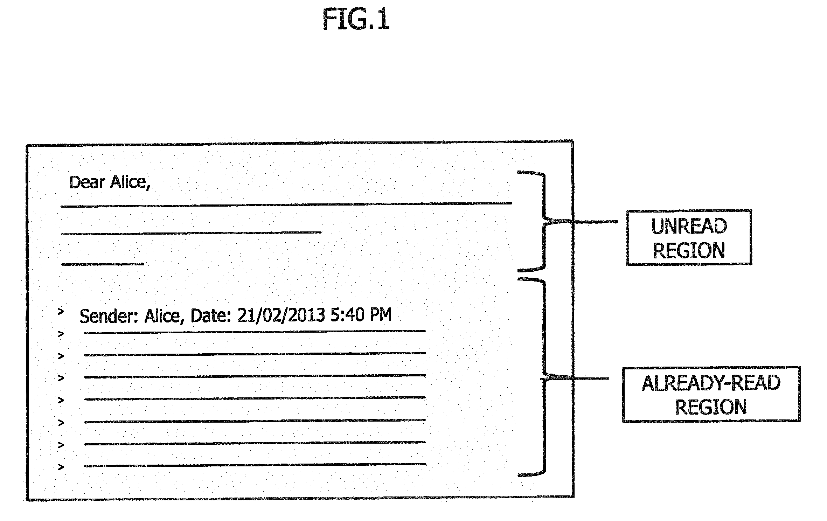

The Example 1 exemplifies a case of determining a quoted region of the mail received by the user as the already-read region and thereafter determining whether the user receiving the mail reads this mail or not. The quoted region is one example of a quoted portion. FIG. 1 is a diagram illustrating an example in which a mail text is classified into the already-read region and the unread region based on whether there is a quoted symbol or not. In FIG. 1, a normal text (indicated by a straight line in the drawing) with no quoted symbol at a line head is written in a first region attached with a rectangle containing a character string "unread region", and the already-read determination apparatus 10 determines that the first region is the unread region defined as an aggregation of sentences being read for the first time by the user as a recipient. The unread region in FIG. 1 is one example of a non-quoted portion. Further, a second region attached with a rectangle containing a character string "already-read region" has a quoted symbol ">" at each line head, and the already-read determination apparatus 10 determines that the second region is the already-read region as an aggregation of sentences being read by the recipient in the past. The already-read region in FIG. 1 is also one example of the quoted portion. The quoted symbol like ">" indicates the sentence created in the past in many cases with respect to the mail, and the region with the quoted symbol existing at each line head can be determined to be the already-read region as the sentence being read in the past. Note that the quoted symbol is not limited to ">", and other symbols may also be available. Further, for example, the already-read determination apparatus 10 may, when an expression, e.g., "Mr. NNN wrote:" indicating a quoted portion is given in a first line of the region in place of the quoted symbol attached to each line, determine that the already-read region extends from this line to a tail of the text or to a next portion having an expression like "Mr. MMM wrote". Herein, each of "NNN", "MMM", etc., is an example of a name of a mail sender.

### <Hardware Configuration>

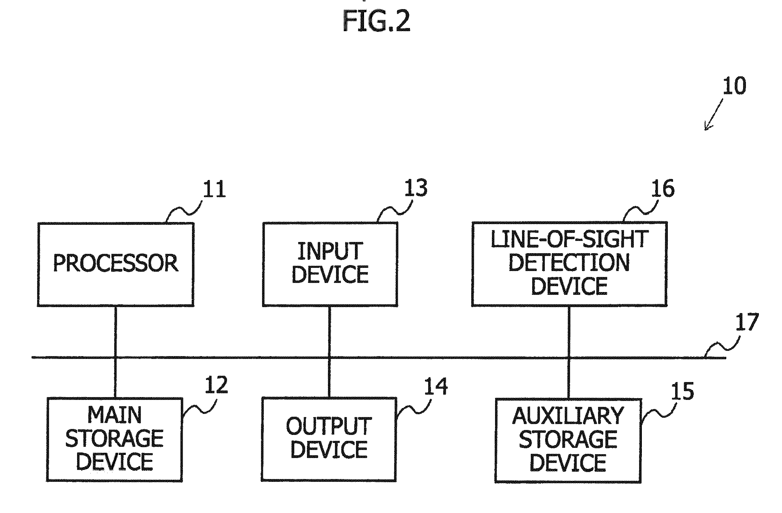

FIG. 2 is a diagram illustrating one example of a hardware configuration of the already-read determination apparatus 10. The already-read determination apparatus 10 includes a processor 11, a main storage device 12, an input device 13, an output device 14, an auxiliary storage device 15 and a line-of-sight detection device 16, which are interconnected via a bus 17.

The processor 11 executes a computer program deployed in an executable manner on the main storage device 12. However, a part of processing by the computer program may be executed by a hardware circuit. The processor 11 is, e.g., a CPU (Central Processing Unit) or a DSP (Digital Signal Processor).

The main storage device 12 provides the processor 11 with a storage area to be loaded with the computer program stored in the auxiliary storage device 15 and also an operation area. Further, the main storage device 12 is used as a buffer for temporarily storing data. The main storage device 12 is a semiconductor memory such as a RAM (Random Access Memory).

The input device 13 accepts an operation input from the user. For example, the input device 13 is exemplified by a pointing device such as a touch pad, a mouse and a touch panel, a keyboard, an operation button, a circuit for receiving a signal from a remote controller, etc. The output device 14 outputs a result of a document already-read determination made by the already-read determination apparatus 10. The output device 14 is, for instance, a liquid crystal display (LCD).

The auxiliary storage device 15 stores a variety of computer programs and the data used by the processor 11 when executing the respective computer programs. The already-read determination apparatus 10 may include, as a substitute for the auxiliary storage device 15, e.g., a nonvolatile memory such as an EPROM (Erasable Programmable Read Only Memory) and a flash memory.

The line-of-sight detection device 16 detects a line of sight of the user, and calculates a gaze position on a screen. The line-of-sight detection device 16 is equipped with, e.g., the infrared LED and the infrared camera.

Note that the hardware configuration of the already-read determination apparatus 10 is not limited to the configuration illustrated in FIG. 2 but may be properly modified by adding, replacing and deleting component thereof. The already-read determination apparatus 10 is an apparatus configured to read the document containing character information and exemplified such as a mobile phone terminal, a smart phone, a tablet terminal, a digital book reader, a personal computer (PC), a wearable terminal and a digital signage system.

### <Processing Block>

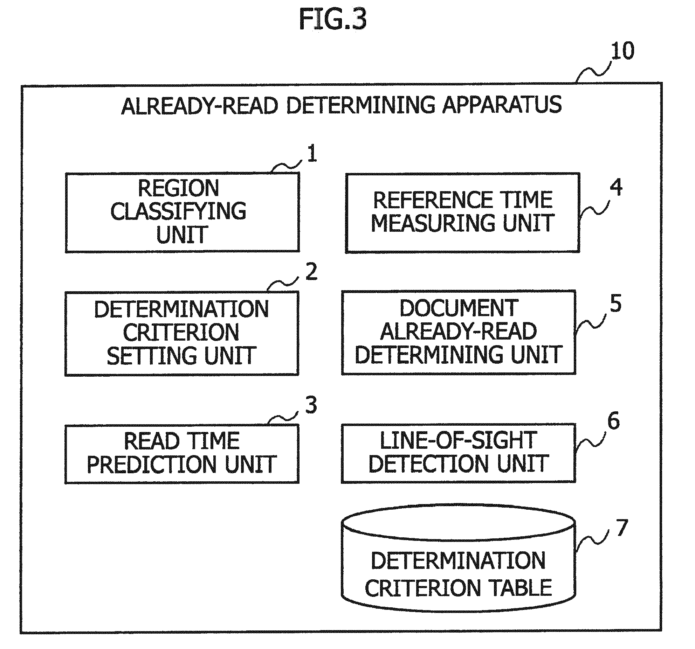

FIG. 3 is a diagram illustrating one example of blocks to execute the processes of the already-read determination apparatus 10. The already-read determination apparatus 10 includes a region classifying unit 1, a determination criterion setting unit 2, a read time prediction unit 3, a reference time measuring unit 4, a document already-read determining unit 5, a line-of-sight detection unit 6 and a determination criterion table 7 as the blocks to execute the respective processes. The processor 11 illustrated in FIG. 2 executes the processes of the respective blocks depicted in FIG. 3. At least a part of any blocks illustrated in FIG. 3 may also be, however, hardware circuit.

The region classifying unit 1 classifies an already-read determination target document into one or a plurality of regions in a way that depends on whether the region is the already-read region or the unread region. For example, the region classifying unit 1 classifies, as the already-read region, an aggregation of lines with the quoted symbols existing at the line heads in the mail text. On the other hand, the region classifying unit 1 classifies, as the unread region, an aggregation of lines without any quoted symbols at the line heads. Further, the region classifying unit 1 may classify the already-read determination target document on a sentence-by-sentence basis, a word-by-word basis and a clause-by-clause basis. Furthermore, the region classifying unit 1 may, when the expression (which will hereinafter be referred to as a quotation representing expression), e.g., "Mr. NNN wrote:" indicating the quoted portion is given in the first line of the region in place of the quoted symbol attached to each line, determine that the already-read region extends from this line to the tail of the text or to a next quotation representing expression portion.

The determination criterion setting unit 2 sets the determination criterion for each region with its classification being made by the region classifying unit 1. To be specific, the determination criterion setting unit 2 refers to the determination criterion table 7, and sets the determination criterion for each region, the criterion corresponding to the classification of the region concerned.

The read time prediction unit 3 predicts, for each region with its classification being made by the region classifying unit 1, the read time of the region concerned on the basis of the determination criterion set by the determination criterion setting unit 2 and the information quantity contained in the region.

The reference time measuring unit 4 measures, on a region-by-region basis, reference time for which to refer to the region contained in the already-read determination target document. For example, the reference time measuring unit 4 may set, as the reference time, a period of time ranging from a point of a measurement target region being displayed on the output device 14 to the present point of time. Further, the reference time measuring unit 4, with the line of sight being detected by the line-of-sight detection device 16, may set a period of time for which to gaze at the measurement target region as the reference time.

The document already-read determining unit 5 determines whether the determination target document is read by the user or not. The document already-read determining unit 5 determines, from predictive read time and the reference time of each region contained in the already-read determination target document, whether each region is read or not, and may, when, e.g., all of the regions are read, determine that the already-read determination target document is read. Moreover, the document already-read determining unit 5 may determine the determination target document is read when a ratio of the reference time to the predictive read time of each region contained in the already-read determination target document is equal to or larger than a threshold value. Further, the document already-read determining unit 5 may determine that the determination target document is read when a total of the periods of predictive read time of the respective regions contained in the already-read determination target document is shorter than a total of the periods of reference time of the respective regions. A condition for determining that the determination target document is already read is not limited to the exemplified condition. The document already-read determining unit 5 is one example of a determining unit.

The line-of-sight detection unit 6 detects a line of sight of the user, and calculates a position of the line of sight being carefully watched on the screen. The reference time measuring unit 4 measures, as the reference time, time for the position of the line of sight being contained in a measurement target region.

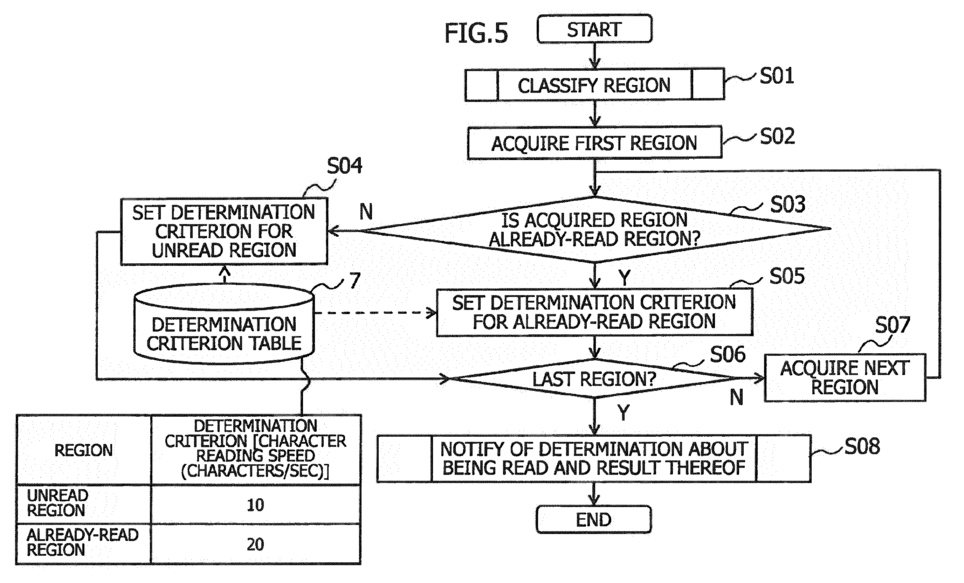

The determination criterion table 7 contains definitions of the determination criteria corresponding to the classified regions. FIG. 5 illustrates an example of a structure of the determination criterion table 7. The example in FIG. 5 is that the determination criterion table 7 contains a plurality of elements to specify the regions corresponding to an "already-read region" and an "unread region". In the Example 1, the region is classified into two categories, i.e., the already-read region" and the "unread region". However, the elements of the "already-read region" the "unread region" exemplified in the determination criterion table 7 in FIG. 5 are given in descriptive columns for the respective regions, but it does not mean that these elements are used to the processes of the document already-read determining unit 5. It is to be noted that the determination criterion table 7 may be dynamically created. Furthermore, the determination criteria (which are also termed attributes) are set in the elements specified by the "already-read region" and the "unread region" in the determination criterion table 7. An example in FIG. 5 is that a character reading speed (characters/sec) is set by way of one example of the determination criterion. For example, the first element in the determination criterion table 7 defines the determination criterion for the unread region, i.e., the criterion that a character reading speed (characters/sec) is "10". Further, the second element in the determination criterion table 7 defines the determination criterion for the already-read region, i.e., the criterion that a character reading speed (characters/sec) is "20". The determination criterion set in FIG. 5 is the character reading speed assumed when reading each region, in which the character reading speed of the already-read region is set higher than the character reading speed of the unread region. This is because the already-read region is easier in grasping contents than the unread region, and the speed at which to read the already-read region is normally higher than reading the unread region.

### <Operational Example>

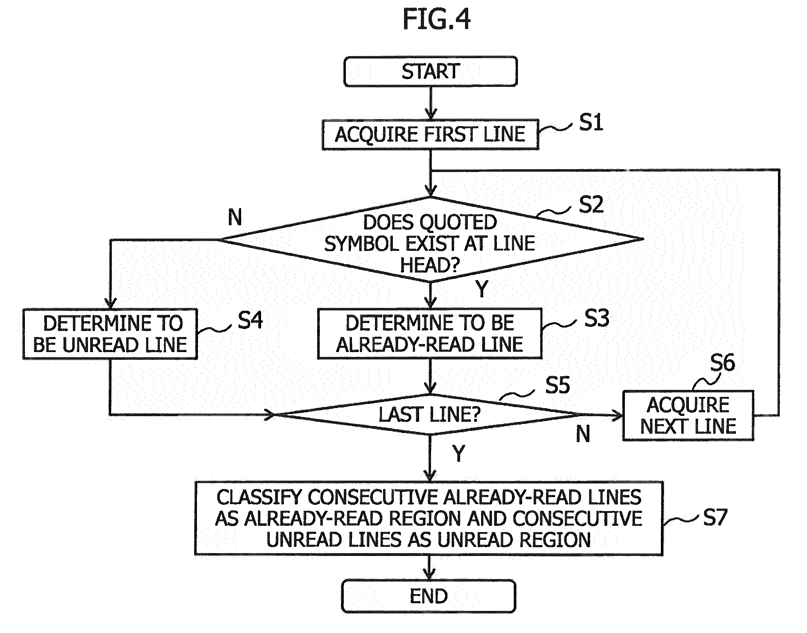

FIG. 4 is a diagram illustrating one example of a flowchart of processes of classifying the document into the already-read region and the unread region. The already-read determination apparatus 10 classifies the already-read determination target document into the already-read region and the unread region by use of the region classifying unit 1. A start of the processes in FIG. 4 is triggered by, e.g., displaying the already-read determination target document on the output device 14.

In a process in S1, the region classifying unit 1 acquires a first line of the already-read determination target document, and the processing is shifted to S2. In S2, the region classifying unit 1 determines whether the quoted symbol exists at the line head of the acquired line or not, and the processing is shifted to S3 when the quoted symbol exists at the line head but is shifted to S4 whereas when the quoted symbol does not exist at the line head. In S3, the region classifying unit 1 determines that the acquired line is an already-read line, and the processing is shifted to S5. In S4, the region classifying unit 1 determines that the acquired line is an unread line, and the processing is shifted to S5. In S5, the region classifying unit 1 determines whether the acquired line is the last line of the already-read determination target document or not, and the processing is shifted to S7 when the acquired line is the last line thereof but is shifted to S6 whereas when not being the last line. In S6, the region classifying unit 1 acquires a line next to the line being acquired at the present, and the processing is looped back to S2. In S7, the region classifying unit 1 classifies consecutive already-read lines as the already-read region and the consecutive unread lines as the unread region, and the processing is terminated. The region classifying unit 1 executes the processes in S1 through S7 by way of one example of classifying the document into the already-read region and the unread region.

FIG. 5 is a diagram illustrating one example of a flowchart of processes of setting the determination criteria in the respective classified regions and determining whether the document is read or not. A start of the processes in FIG. 5 is triggered by, e.g., displaying a determination target document on the output device 14.

In S01, the already-read determination apparatus 10, with the region classifying unit 1 classifying the determination target document into the already-read region and the unread region, shifts the processing to S02.

The already-read determination apparatus 10, executes the processes in S02 through S07 by use of the determination criterion setting unit 2. In S02, the determination criterion setting unit 2 acquires the first region of the already-read determination target document, and the processing is shifted to S03. In S03, the determination criterion setting unit 2 determines whether the acquired region is the already-read region or not, and the processing is shifted to S05 when being the already-read region but is shifted to S04 whereas when not being the already-read region. In S04, the determination criterion setting unit 2 sets the determination criterion for the unread region for the acquired region. To be specific, the determination criterion setting unit 2 refers to the determination criterion table 7 and sets, for the acquired region, the character reading speed "10" (characters/sec) defined as the determination criterion for the unread region, and the processing is shifted to S06. In S05, the determination criterion setting unit 2 sets the determination criterion for the already-read region for the acquired region. Specifically, the determination criterion setting unit 2 refers to the determination criterion table 7 and sets, for the acquired region, the character reading speed "20" (characters/sec) defined as the determination criterion for the already-read region, and the processing is shifted to S06. In S06, the determination criterion setting unit 2 determines whether the acquired region is the last region within the document or not, and the processing is shifted to S08 when being the last region but is shifted to S07 whereas when not being the last region. In S07, the determination criterion setting unit 2 acquires a region next to the acquired region, and the processing is looped back to S03. In s08, the already-read determination apparatus 10 determines that the determination target document is read and displays a result of the determination on the output device 14, and the processing is terminated.

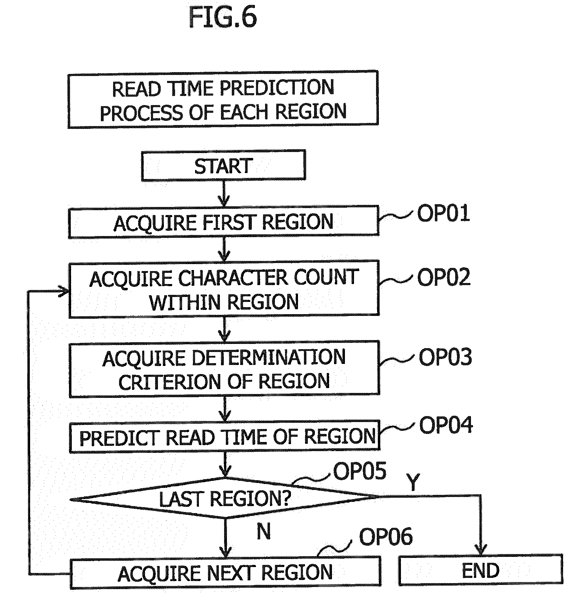

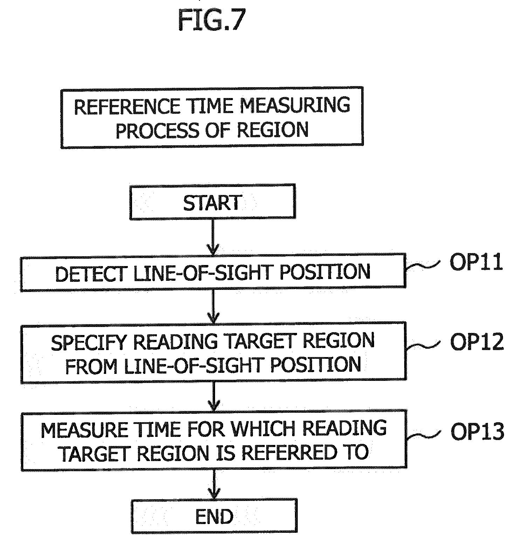

FIGS. 6, 7, 8A, 8B and 8C illustrate flowcharts of a process in S08 of making the determination of the region being read and notifying of a result thereof. Each of processes in FIGS. 6, 7 and 8A through 8C corresponds to the process in S08 of FIG. 5. FIG. 6 illustrates the flowchart of a process, being common to the process of making notification of the result of the already-read determination in S08, of predicting the read time of each region. FIG. 7 illustrates the flowchart of a process, being common to the process of making notification of the result of the already-read determination in S08, of measuring the reference time of each region.

FIG. 6 is a diagram illustrating one example of the flowchart of a process of setting the read time of each region in S08 of FIG. 5. The already-read determination apparatus 10 sets the read time of each region by use of the read time prediction unit 3. A start of processes in FIG. 6 is triggered by, e.g., an event that the already-read determination apparatus 10 advances to the process of making the notification of the result of the already-read determination in S08 of FIG. 5.

In OP01, the read time prediction unit 3 acquires the first region of the already-read determination target document, and the processing is shifted to OP02. In OP02, the read time prediction unit 3 obtains a character count within the acquired region, and the processing is shifted to OP03 In OP03, the read time prediction unit 3 acquires the determination criterion for the acquired region by referring to the determination criterion table 7, and the processing is shifted to OP04. In OP04, the read time prediction unit 3 predicts the read time of the acquired region from the character count within the region and the determination criterion. The read time prediction unit 3 may also set, as predictive read time, a result of dividing the character count within the region by the character reading speed (characters/sec) defined as the determination criterion. The read time prediction unit 3 shifts the processing to OP05. In OP05, the read time prediction unit 3 determines whether the acquired region is the last region of the already-read determination target document or not, and the processing is shifted to OP06 when not being the last region but is finished whereas when being the last region. The read time prediction unit 3 executes the processes in OP01 through OP06 by way of one example of setting the predictive read time of each of the already-read region and the unread region.

FIG. 7 is a diagram illustrating one example of a flowchart of processes of measuring reference time of a reading target region. A start of the processes in FIG. 7 is triggered by, e.g., an event that a specified region within the already-read determination target document contains a position of the line of sight detected by the line-of-sight detection unit 6.

In OP11, the already-read determination apparatus 10 detects the position of the line of sight of the user by use of the line-of-sight detection unit 6, and shifts the processing to OP12. In OP12, the line-of-sight detection unit 6 specifies the region containing the position of the line of sight as a user's reading target region, and the processing is shifted to OP13. In OP13, the already-read determination apparatus 10 measures a period of time for which to refer to the reading target region by use of the reference time measuring unit 4, and the processing is terminated. The reference time measuring unit 4 executes the process in OP13 by way of one example of measuring the reference time.

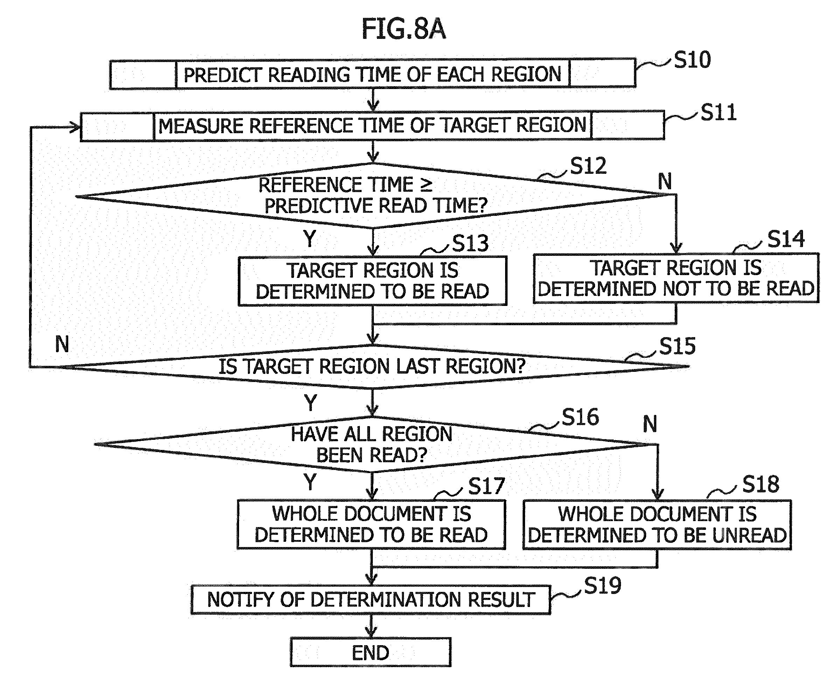

FIG. 8A is a diagram illustrating one example of a flowchart of processes of determining that the whole document is read when the user reads the respective regions and notifying of a result of determining whether the document is read or not. The processes in FIG. 8A are given by way of one example of the process in S08.

In S10, the already-read determination apparatus 10 predicts the read time of each region by using the read time prediction unit 3, and the processing is shifted to S11. The process in S10 corresponds to a process of predicting the read time of each region illustrated in FIG. 6.

In S11, the already-read determination apparatus 10 measures the reference time of the reading target region by using the reference time measuring unit 4, and the processing is shifted to S12. The process in S11 corresponds to a process of measuring the reference time of the reading target region depicted in FIG. 7. Note that the measurement of the reference time is not limited to the measurement based on the detection of the line of sight. For example, the reference time measuring unit 4 may measure, as the reference time, a period of time for which the reading target region remains displayed on the output device 14. Further, the reference time measuring unit 4 may also measure, as the reference time, a period of time for which the reading target region remains scroll-displays on the output device 14. The time of the region being scroll-displayed can be measured as a period of time for which, e.g., the document is scrolled in up-and-down directions at a speed within a predetermined range on the screen.

The already-read determination apparatus 10 executes the processes in S12 through S19 by using the document already-read determining unit 5. In S12, the document already-read determining unit 5 determines whether or not the reference time to the reading target region is equal to or longer than the predictive read time of the region concerned, and the processing is shifted to S 13 when being equal to or longer than the predictive read time of the region concerned but is shifted to S14 whereas when being shorter than the predictive read time of the region concerned.

In S13, the document already-read determining unit 5 determines that the reading target region is read, and the processing is shifted to S15. In S14, the document already-read determining unit 5 determines that the reading target region is not yet read, and the processing is shifted to S15. In S15, the document already-read determining unit 5 determines whether the reading target region is the last region within the document or not, and the processing is shifted to S16 when being the last region but is looped back to S11 whereas when not being the last region. Herein, the determination as to whether or not the reading target region is the last region may include determining that the current reading target region is the last region when the already-read determination target document does not contain any region with the reference time not being measured.

In S16, the document already-read determining unit 5 determines whether or not the determination target document contains the unread region, and the processing is shifted to S17 when containing none of the unread region but is shifted to S18 whereas when containing the unread region. In S17, the document already-read determining unit 5 determines that the determination target document is already read, and the processing is shifted to S19. In S18, the document already-read determining unit 5 determines that the already-read determination target document is not yet read, and the processing is shifted to S19. In S19, the document already-read determining unit 5 notifies the user of a result of the determination about whether the document is read or not, and the processing is terminated. The user may be notified of the result of the determination by, e.g., displaying the result of the determination on the output device 14. The document already-read determining unit 5 executes the processes in S12 through S19 by way of one example of making the determination of being read by the user.

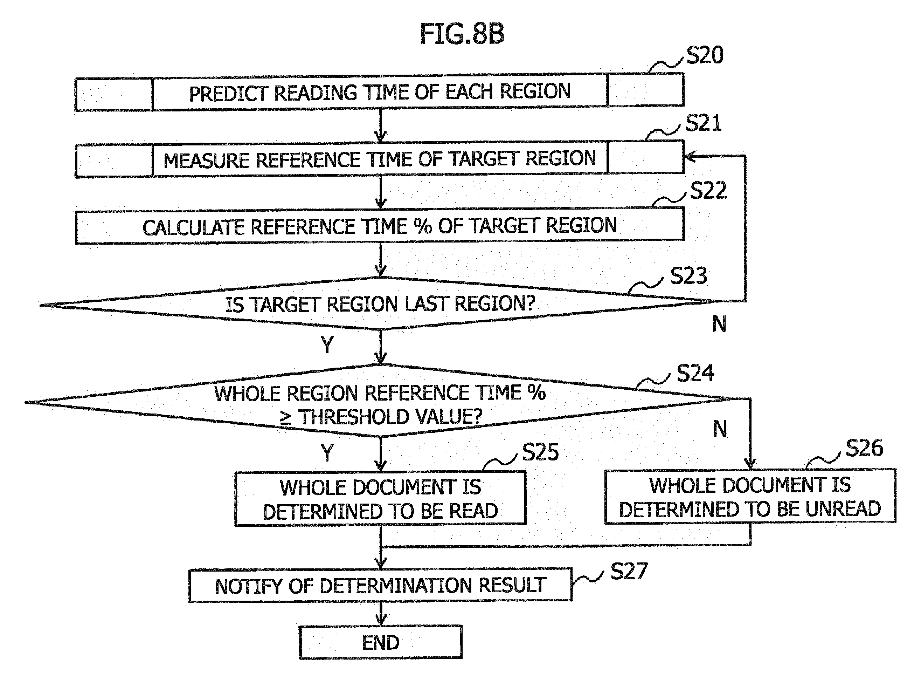

FIG. 8B is a diagram illustrating one example of a flowchart of processes of determining that the whole document is read when a ratio of the reference time to the predictive read time of each region is equal to or larger than a threshold value, and notifying of a result of the determination as to whether the document is read or not. The processes in fig 8B are given by way of one example of the process in S08 of FIG. 5.

Processes in S20 and S21 are respectively the same as the processes in S10 and S11 of FIG. 8A, and hence a description thereof is omitted. The already-read determination apparatus 10 executes processes in S22 through S27 by employing the document already-read determining unit 5. In S22, the document already-read determining unit 5 calculates a ratio at which the reference time to the reading target region occupies the predictive read time of the reading target region, and the processing is shifted to S23. The process in S23 is the same as the process in S15 of FIG. 8A, and hence its description is omitted. The document already-read determining unit 5 shifts the processing to S24. In S24, the document already-read determining unit 5 determines whether or not the ratio, being calculated in S22, of the reference time of each region is equal to or larger than the threshold value with respect to any of the regions, and the processing is shifted to S25 when being equal to or larger than the threshold value but is shifted to S26 whereas when being smaller than the threshold value. The processes in S25, S26 and S27 are respectively the same as the processes in S17, S18 and S19 of FIG. 8A, and hence the description thereof are omitted. The document already-read determining unit 5 executes the processes in S22 through S27 by way of one example of making the determination of being read by the user.

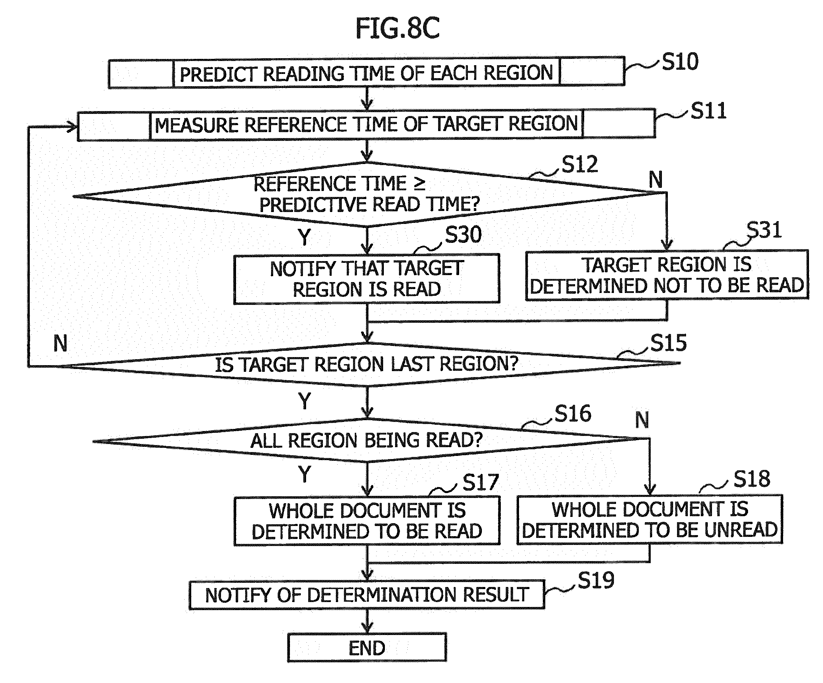

FIG. 8C is a diagram illustrating one example of a flowchart of processes of determining that the whole document is read when the user reads each region, and notifying of a result of the determination per region and a result of the determination about the whole document. The same processes as those in FIG. 8A are marked with the same numerals and symbols, and the description thereof is omitted.

In S30, the document already-read determining unit 5 determines that the user's reading target region is read, and notifies of a result of the determination. The document already-read determining unit 5 may give the notification in a way that sets, e.g., a background color for the reading target region, the color being different from that of the unread region. In S31, the document already-read determining unit 5 notifies that the user's reading target region is not yet read. The document already-read determining unit 5 may give the notification in a way that sets, e.g., a background color for the reading target region, the color being different from that of the already-read region. The document already-read determining unit 5 executes the processes in S12, S30, S31 and S15 through S19 by way of one example of making the determination of being read by the user.

In the Example 1, the already-read determination apparatus 10 sets the determination criterion being different depending on whether each of the regions within the already-read determination target document is the already-read region or the unread region or whether a portion is a quoted portion or a non-quoted portion. Then, the already-read determination apparatus 10 predicts the read time from the determination criterion and an information quantity with respect to each region, and can determine, when the predictive read time is shorter than the reference time and when the ratio of the reference time to the predictive read time is equal to or larger than a threshold value, that the user reads the region concerned. The already-read determination apparatus 10 can determine that the document concerned is read when there is no unread region in the respective regions within the document. For example, the already-read determination apparatus 10, with respect to portions created by the user himself or herself in the past, i.e., the already-read portions, sets the predictive read time, for determining whether the user reads or not, shorter than the read time of the non-quoted portion or the unread portion. Thus, the already-read determination apparatus 10 sets the determination criterion being different per region, thereby making it possible to determine more precisely whether the user reads each region or the whole document. The user is notified of the result of the determination about each region or the whole document is thereby enabled to recognize more accurately whether, e.g., there is any portion failing to be read or not.

### [Example 2]

The Example 2 assumes that the already-read determination target document is a reply mail in response to a mail transmitted by the user. In the case of classifying the reply mail into the already-read region and the unread region, the already-read region normally contains a text transmitted by the user himself or herself and a text transmitted another person other than the user concerned. The text transmitted by the user himself or herself has a large quantity of information that can be acquired from memory and can be therefore read faster than the text transmitted by another person. Accordingly, the already-read determination apparatus 10 sets a higher character reading speed as the determination criterion than a character reading speed in a region containing the text transmitted by another person in a region containing the text transmitted by the user himself or herself. Hence, the predictive read time of the region containing the text transmitted by the user himself or herself is shorter than the predictive read time of the region containing the text transmitted by another person. The already-read determination apparatus 10 predicts the read time by setting the determination criterion being different depending on whether the already-read region is the region containing the text transmitted by the user himself or herself or the region containing the text transmitted by another person, and is thereby enabled to determine more precisely whether the whole document is read by the user or not.

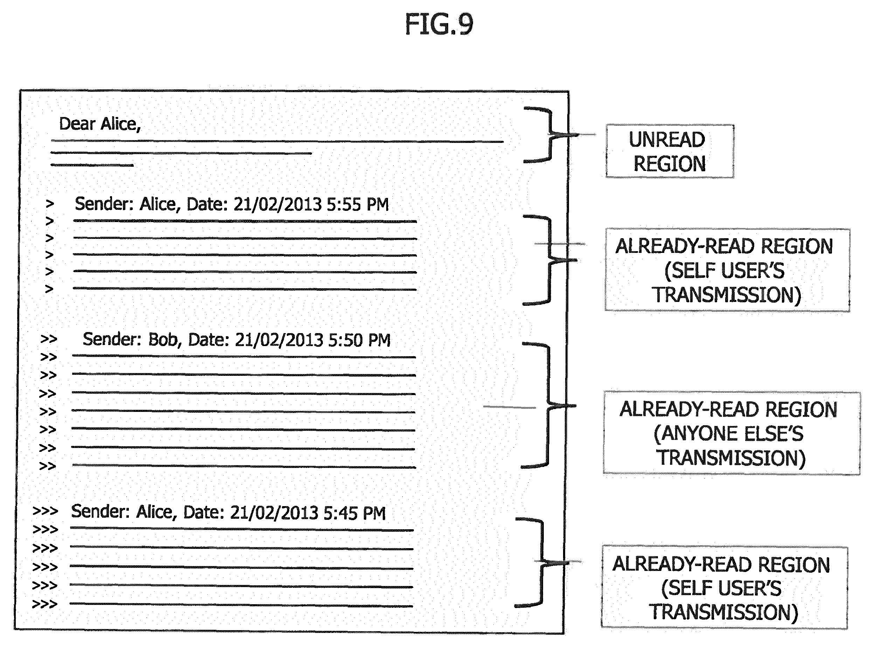

The Example 2 exemplifies a case of defining a quoted region as the already-read region in the reply mail received by the user, then classifying the already-read region further into the region containing the text transmitted by the user himself or herself and the region containing the text transmitted by another person, and setting the determination criterions being different from each other. FIG. 9 is a diagram illustrating an example of classifying a mail text into a plurality of regions by taking account of a mail sender. In FIG. 9, a first region marked with a rectangle containing a character string "unread region" has no quoted symbol at the line head but contains a description of normal sentences (indicated by straight lines in the drawing), and the already-read determination apparatus 10 determines the first region to be the unread region as an aggregation of the sentences to be read by the user for the first time. Further, a second region marked with a rectangle containing a character string "already-read region" contains Alice as a Sender and a representation of a quoted symbol ">" at each line head, and the already-read determination apparatus 10 determines the second region to be the already-read region containing the text transmitted by Alice herself as a mail recipient. Moreover, a third region marked with a rectangle containing a character string "already-read region" contains Bob as a Sender and a representation of a quoted symbol ">>" at each line head, and the already-read determination apparatus 10 determines the third region to be the already-read region containing the text transmitted by another person other than Alice as the mail recipient. A fourth region contains Alice as the Sender and a representation of a quoted symbol ">>>" at each line head, and the already-read determination apparatus 10, similarly to the second region, determines the second region to be the already-read region containing the text transmitted by the Alice herself as the mail recipient. Note that a hardware configuration and processing blocks in the Example 2 are the same as those in the Example 1, and hence the descriptions thereof are omitted. Items of information such as a user name of the sender, a network address and information indicating other elements of the regions classified by the quoted symbols etc. as given at the line heads of the respective already-read regions, will hereinafter be generically termed header information. Note that FIG. 9 illustrates the representations on the screen but does not limit a position of the header information according to communication data standards. The header information of the mail according to the communication data standards depends on a mail application program thereof but does not limit the configuration of the present embodiment.

### <Operational Example>

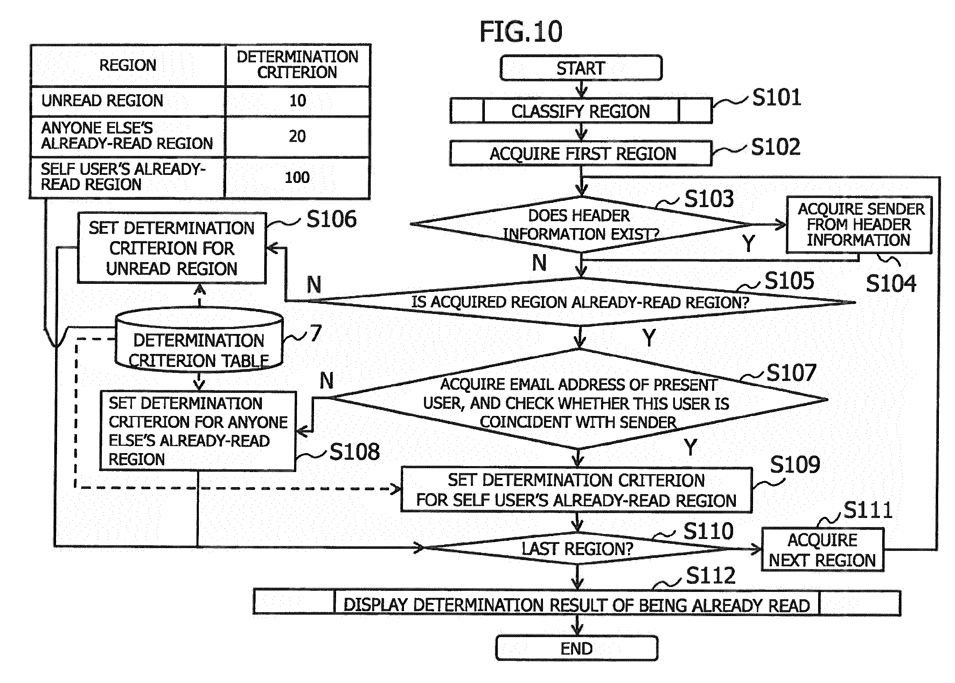

FIG. 10 is a diagram illustrating one example of a flowchart of processes of setting the determination criterion taking account of the sender in each of the classified regions, and determining whether the document is already read or not. A start of processes in FIG. 10 is triggered by, e.g., displaying the already-read determination target document on the output device 14.

A process in S101 is the same as the process in S01 of FIG. 5, and hence its description is omitted. The already-read determination apparatus 10 performs processes in S102 through S111 by use of the determination criterion setting unit 2. A process in S102 is the same as the process in S02 of FIG. 5, and hence its description is omitted.

In S103, the determination criterion setting unit 2 determines whether the header information exists in the acquire region or not, and the processing is shifted to S104 when the header information exists therein but is shifted to S105 whereas when the header information does not exist therein. In S104, the determination criterion setting unit 2 acquires the sender from the header information, and the processing is shifted to S105. In S105, the determination criterion setting unit 2 determines whether the acquired region is the already-read region or not, the processing is shifted to S107 when being the already-read region but is shifted to S106 whereas when not being the already-read region. In S106, the determination criterion setting unit 2 sets the determination criterion for the unread region in the acquired region. To be specific, the determination criterion setting unit 2 refers to the determination criterion table 7 and sets, for the acquired region, the character reading speed "10" (characters/sec) defined as the determination criterion for the unread region, and the processing is shifted to S110. In S107, the determination criterion setting unit 2 acquires a network address of the current user from, e.g., mail software for transmitting and receiving e-mails, and determines whether or not the current user is identified with the sender acquired in S104. It does not, however, mean that a determination about the identification of the current user with the sender is limited to being based on the network address. The determination criterion setting unit 2 may also determine the identification of the current user with the sender by using, e.g., a user name, user identifying information, etc. that are defined on the network. The address, the user name, the user identifying information, etc. of the header information are given by way of one example of information indicating a user creating a quoted portion. The determination criterion setting unit 2 shifts the processing to S109 when the current user is identified with the sender but shifts the processing to S108 whereas when the current user is not identified with the sender. In S108, the determination criterion setting unit 2 sets, for the acquired region, the determination criterion for the already-read region containing the text transmitted by another person. Specifically, the determination criterion setting unit 2 refers to the determination criterion table 7 and sets, for the acquired region, the character reading speed "20" (characters/sec) as the determination criterion for the already-read region of another person, and the processing is shifted to S110. In S109, the determination criterion setting unit 2 sets, for the acquired region, the determination criterion for the already-read region containing the text transmitted by the user himself or herself. To be specific, the determination criterion setting unit 2 refers to determination criterion table 7 and sets, for the acquired region, the character reading speed "100" (characters/sec) as the determination criterion for the already-read region of the user himself or herself, and the processing is shifted to S110. In S110, the determination criterion setting unit 2 determines whether the acquired region is the last region within the document or not, and the processing is shifted to S112 when being the last region but is shifted to S111 whereas when not being the last region. In S111, the determination criterion setting unit 2 acquires a region next to the acquired region, and the processing is looped back to S103. In S112, the already-read determination apparatus 10 determines that the determination target document is read, displays a result of the determination on the output device 14, and finishes the processing. The process in S112 is exemplified by the processes in FIGS. 8A through 8C, which are described in the Example 1. Based on the premise of the processes in S107-S109 that are performed by the determination criterion setting unit 2, the processes in OP03-OP04 of FIG. 6 by the read time prediction unit 3 are given by way of one example of setting a shorter period of predictive read time when the user creating a quoted portion is identified with the user referring to the quoted portion than when not identified.

In the Example 2, the already-read determination apparatus 10, similarly to the Example 1, sets, for each of the regions within the already-read determination target document, the determination criterion being different depending on whether the region is the already-read region or the unread region or whether the portion is the quoted portion or the non-quoted portion. Further in the Example 2, the already-read determination apparatus 10 classifies the already-read region into the already-read region containing the text transmitted by the user himself or herself and the already-read region containing the text transmitted by another person, and sets the determination criteria being different from each other. For example, the already-read determination apparatus 10 sets the higher character reading speed and the shorter predictive read time when the user creating the quoted portion is identified with the user referring to the quoted portion than when not identified. Thus, the already-read determination apparatus 10 sets the determination criterion taking account of the sender for each region and is thereby enabled to determine more precisely whether or not the user reads the mail containing the text transmitted by the user himself or herself.

### [Example 3]

The Example 3 assumes that the determination target document is a mail in which a part of the mail transmitted by the user is quoted and a reply thereto is short. The already-read region of the mail received by the user is followed by existence of the unread region, and the unread region has a small character count, in which case it is considered that the already-read region becomes longer in terms of the read time than normal. This is because when the unread region subsequent to the already-read region has a smaller character count, a less quantity of information is obtained from the unread region, and the already-read region has a high possibility of being read once again to understand a context. For example, "Understood" is written to the unread region, in which case it is presumed that this implies a reply to the sentence quoted just anterior, and there is a possibility of misunderstanding which item the reply is given to if the user does not read the quoted sentence. Accordingly, the already-read determination apparatus 10 sets, for the already-read region being followed next by the unread region with a small character count, a character reading speed being lower than the character reading speeds of other already-read regions but higher than that of the unread region as the determination criterion. Therefore, the predictive read time of the already-read region being followed next by the unread region with the small character count becomes longer than periods of predictive read time of other already-read regions. The already-read determination apparatus 10 sets, for the already-read region being followed next by the unread region with the small character count, the character reading speed being lower than the character reading speeds of other already-read regions as the determination criterion, then predicts the read time and is thereby enabled to determine more precisely whether the whole document is already read or not. Note that a sender name, a greeting, a signature, etc. may be excluded from the already-read determination targets.

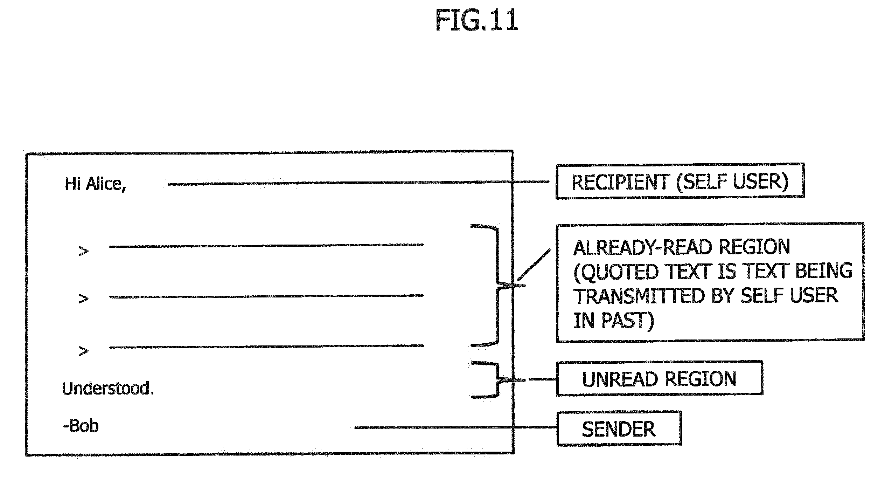

The Example 3 exemplifies a case of sorting the quoted region as the already-read region in the mail received by the user and setting, with respect to the already-read region being followed next by the unread region with the small character count, the character reading speed being slower than those of other already-read regions as the determination criterion. FIG. 11 is a diagram illustrating an example in which the unread region next to the already-read region is a short region in the mail text. In FIG. 11, a name of a recipient is indicated as a mail destination in the first region. The second region with a quoted symbol ">" indicated at each line head is determined to be the already-read region. The third region with any quoted symbol not indicated at the line head is determined to be the unread region. The third region is as short as "Understood", and therefore the user as the recipient has a high possibility of reading again the second already-read region. Note that a hardware configuration and processing blocks in the Example 3 are the same as those in the Example 1, and hence the descriptions thereof are omitted.

### <Operational Example>

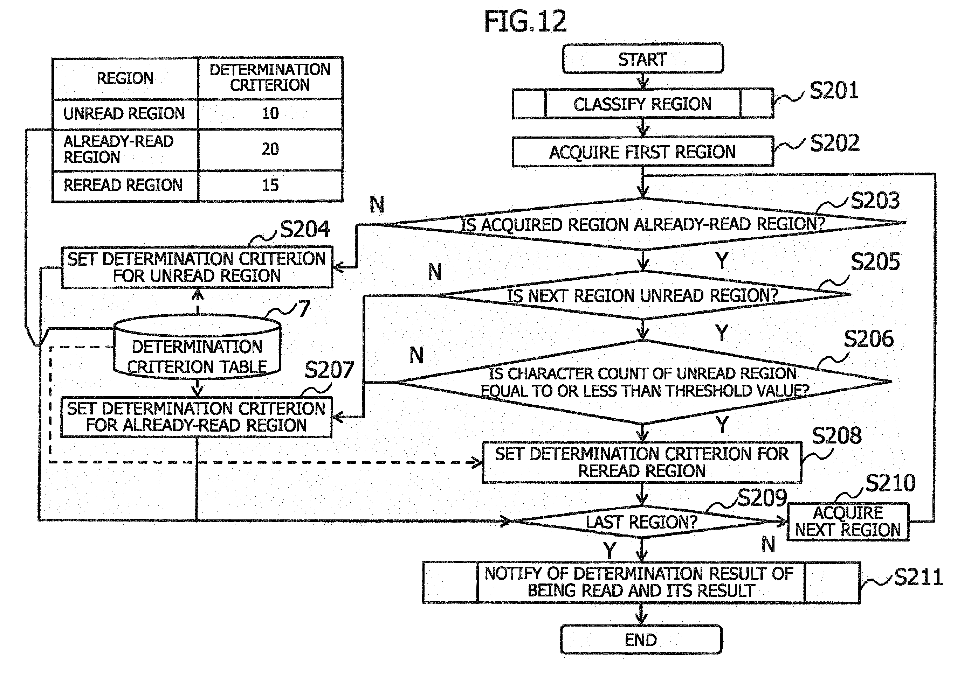

FIG. 12 is a diagram illustrating one example of a flowchart of processes of setting the determination criterion taking account of such a case that the unread region next to the already-read region is a short region, and determining whether the document is read by the user or not. A start of processes in FIG. 12 is triggered by, e.g., displaying the already-read determination target document on the output device 14.

A process in S201 is the same as the process in S01 of FIG. 5, and hence the description thereof is omitted. The already-read determination apparatus 10 performs processes in S202 through S210 by employing the determination criterion setting unit 2. A process in S202 is the same as the process in S02 of FIG. 5, and hence the description thereof is omitted.

In S203, the determination criterion setting unit 2 determines whether the acquired region is the already-read region or not, and the processing is shifted to S205 when being the already-read region but is shifted to S204 whereas when not being the already-read region. In S204, the determination criterion setting unit 2 sets, for the acquired region, the determination criterion for the unread region. Specifically, the determination criterion setting unit 2 refers to determination criterion table 7 and sets, for the acquired region, the character reading speed "10" (characters/sec) as the determination criterion for the unread region, and the processing is shifted to S209. In S205, the determination criterion setting unit 2 determines whether the region next to the acquired region is the unread region or not, and the processing is shifted to S206 when being the unread region but is shifted to S207 whereas when not being the unread region. In S206, the determination criterion setting unit 2 determines whether or not the character count of the unread region, i.e., the region next to the acquired region is equal to or smaller than a threshold value, e.g., 30 characters, and the processing is shifted to S208 when equal to or smaller than 30 characters but is shifted to S207 whereas when larger than 30 characters. It does not, however, mean that the threshold value in S206 is limited to 30 characters. In S207, the determination criterion setting unit 2 sets, for the acquired region, the determined criterion for the already-read region. To be specific, the determination criterion setting unit 2 refers to determination criterion table 7 and sets, for the acquired region, the character reading speed "20" (characters/sec) as the determination criterion for the already-read region, and the processing is shifted to S209. In S208, the determination criterion setting unit 2 sets, for the acquired region, a determined criterion for a reread region. Specifically, the determination criterion setting unit 2 refers to determination criterion table 7 and sets, for the acquired region, the character reading speed "15" (characters/sec) as the determination criterion for the reread region, the processing is shifted to S209. Herein, the reread region is the already-read region being followed by the existence of the unread region having the small character count and a character reading speed, which is higher than the reading speed of the unread region but lower than that of the already-read region, is set as a setting criterion in this reread region. In S209, the determination criterion setting unit 2 determines whether the acquired region is the last region within the document or not, and the processing is shifted to S211 when being the last region but is shifted to S210 whereas when not being the last region. In S210, the determination criterion setting unit 2 obtains the region next to the acquired region, and the processing is looped back to S203. In S211, the already-read determination apparatus 10 determines that the determination target document is read, displays a result of the determination on the output device 14, and finishes the processing. The process in S211 is exemplified by the processes in FIGS. 8A through 8C, which are described in the Example 1. Based on the premise of the processes in S206-S208 that are performed by the determination criterion setting unit 2, the processes in OP03-OP04 of FIG. 6 by the read time prediction unit 3 are given by way of one example of setting a longer period of predictive read time to read the quoted portion adjacent to the non-quoted portion when an information quantity of the non-quoted portion is smaller than a predetermined reference value than when the information quantity of the non-quoted portion is equal to or larger than the predetermined reference value.

In the Example 3, the already-read determination apparatus 10, similarly to the Example 1, sets, for each of the regions within the already-read determination target document, the determination criteria being different depending on whether the region is already-read region or the unread region or whether the portion is the quoted portion or the non-quoted portion. Further in the Example 3, the already-read determination apparatus 10 sets, for the already-read region being followed next by the existence of the unread region with the small character count, the character reading speed being higher than that of the unread region but lower than that of the already-read region as the setting criterion. Thus, the already-read determination apparatus 10 sets the determination criterion taking account of such a case that, e.g., the unread region next to the already-read region is a short region, and is thereby enabled to determine more accurately whether the user reads a mail containing the unread region with its text being short and having a high possibility of the just-anterior already-read region being reread.

### [Example 4]

The Example 4 assumes that the already-read determination target document is a mail of which transmission and reception are repeated plural number of times. When classifying the mail of which transmission and reception are repeated plural number of times into the already-read region and the unread region, the already-read region includes a plurality of regions with their quoted counts being different. The region with the quoted count being larger than those of other regions is also larger in terms of a read count than those of other regions with their quoted counts being small, and can be therefore read faster than other regions with the quoted counts being small. Accordingly, the already-read determination apparatus 10 sets, as the determination criterion, a reading speed being higher than those of other regions with the quoted counts being small, for the region with the quoted count being larger than those of other regions. Hence, the predictive read time of the region with the quoted count being larger than those of other regions becomes shorter than the periods of predictive read time of other regions with their quoted counts being small. The already-read determination apparatus 10 sets the different determination criteria for the respective regions in a way that corresponds to the quoted count of the already-read region and predicts the read time, whereby it can be precisely determined whether the user reads the whole document or not.

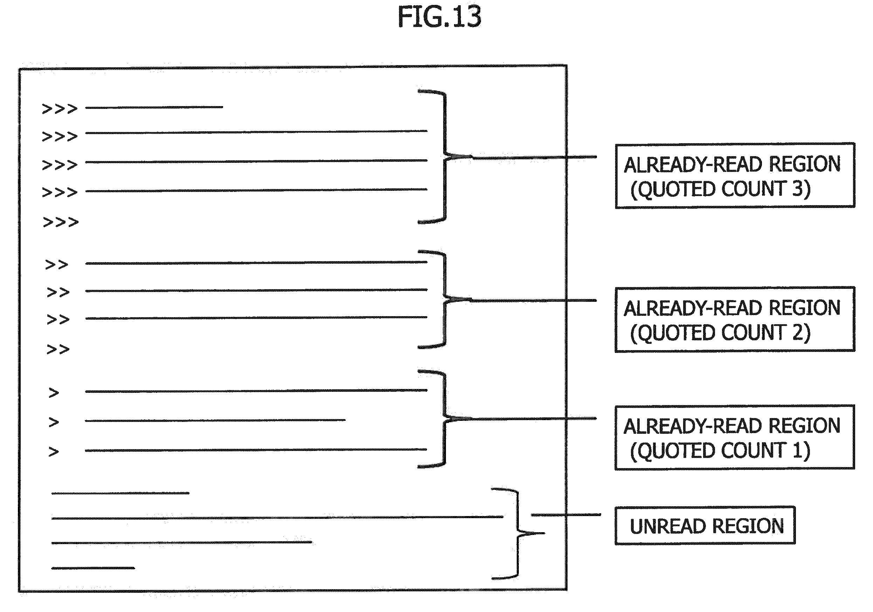

The Example 4 exemplifies a case of, with respect to a mail received by the user, setting the quoted region as the already-read region, classifying the already-read region further into a plurality of regions corresponding to the quoted count, and setting the determination criteria being different from each other. The quoted count can be determined from a consecutive number of the quoted symbols inserted at the line heads of the respective lines. FIG. 13 is a diagram illustrating an example of classifying a mail text into the plurality of regions by taking account of the quoted account. In FIG. 13, a first region has a quoted symbol ">>>" attached to line heads, and is determined to be the already-read region with the quoted count being "3". A second region has a quoted symbol ">>" attached to the line heads, and is determined to be the already-read region with the quoted count being "2". A third region has a quoted symbol ">" attached to the line heads, and is determined to be the already-read region with the quoted count being "1". A fourth region has none of the quoted symbols attached to the line heads, and is determined to be the unread region. Note that the hardware configuration and the processing blocks in the Example 4 are the same as those of the Example 1, and hence their descriptions are omitted.

### <Operational Example>

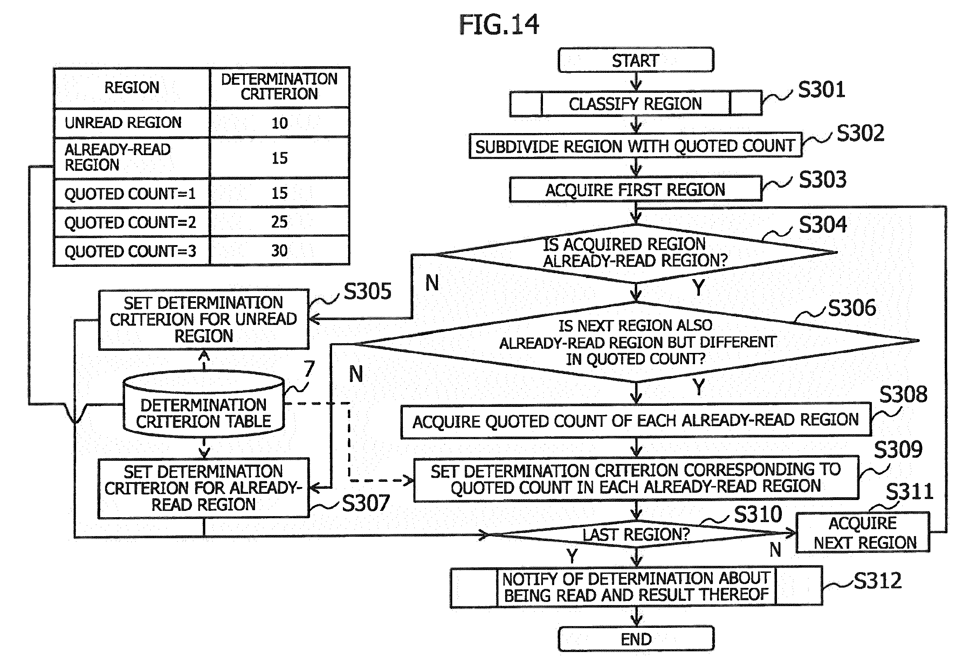

FIG. 14 is a diagram illustrating one example of a flowchart of processes of setting the determination criteria taking account of the quoted counts in the classified regions, and determining whether the document is read by the user or not. A start of the processes in FIG. 14 is triggered by displaying, e.g., a determination target document on the output device 14.

A process in S301 is the same as the process in S01 of FIG. 5, and therefore its description is omitted. In S302, the already-read determination apparatus 10 further sub-segments the already-read region by use of the region classifying unit 1, and the processing is shifted to S303. The already-read determination apparatus 10 executes the processes in S303 through S311 by employing the determination criterion setting unit 2. The process in S303 is the same as the process in S02 of FIG. 5, and therefore its description is omitted.

In S304, the determination criterion setting unit 2 determines whether the acquired region is the already-read region or not, and the processing is shifted to S306 when being the already-read region but is shifted to S305 whereas when not being the already-read region. In S305, the determination criterion setting unit 2 sets, for the acquired region, the determination criterion for the unread region. To be specific, the determination criterion setting unit 2 refers to the determination criterion table 7 and sets, for the acquired region, the character reading speed "10" (characters/sec) defined as the determination criterion for the unread region, and the processing is shifted to S310. In S306, the determination criterion setting unit 2 determines whether or not a region next to the acquired region is also the already-read region and whether or not the quoted count of the acquired region is different from the quoted count of the next region, and the processing is shifted to S308 when the quoted count is different but is shifted to S307 whereas when not different. In S307, the determination criterion setting unit 2 sets, for the acquired region, the determination criterion for the already-read region. Specifically, the determination criterion setting unit 2 refers to determination criterion table 7 and sets, for the acquired region, the character reading speed "15" (characters/sec) as the determination criterion for the already-read region, the processing is shifted to S310. In S308, the determination criterion setting unit 2 obtains the quoted count of the acquired region and the quoted count of the already-read region subsequent to the acquired region, and the processing is shifted to S309. In S309, the determination criterion setting unit 2 sets the determination criteria corresponding to the respective quoted counts in the acquired region and in the already-read region subsequent to the acquired region. Concretely, the determination criterion setting unit 2 refers to determination criterion table 7 and sets, for the acquired region or the already-read region subsequent to the acquired region, the character reading speed (characters/sec) corresponding to the quoted count as the determined criterion, and the processing is shifted to S310. The determination criterion corresponding to the quoted count is, e.g., "15" (characters/sec) when the quoted count is "1", "25" (characters/sec) when the quoted count is "2" and "30" (characters/sec) when the quoted count is "3". In S310, the determination criterion setting unit 2 determines whether the acquired region is the last region within the document or not, and the processing is shifted to S312 when being the last region but is shifted to S311 whereas when not being the last region. In S311, the determination criterion setting unit 2 acquires the region next to the region in which to set the determination criterion, and the processing is looped back to S304. In S312, the already-read determination apparatus 10 makes a determination of the determination target document being read, and displays a result of the determination on the output device 14, resulting in an end of the processing. The process in S312 is exemplified by the processes in FIGS. 8A through 8C described in the Example1. Based on the premise of the processes in S306, S308, S309 that are performed by the determination criterion setting unit 2, the processes in OP03-OP04 of FIG. 6 by the read time prediction unit 3 are given by way of one example of setting a different period of read time corresponding to the quoted count indicated by symbols when the non-quoted portion is attached with symbols indicating a plural number of quotations.

In the Example 4, the already-read determination apparatus 10, in the same way as in the Example 1, sets, for each of the regions within the already-read determination target document, the determination criteria being different depending on whether the regions is the already-read region or the unread region or whether the portion is the quoted portion or the non-quoted portion. Moreover, in the Example 4, the already-read determination apparatus 10 further classifies the already-read region into the plurality of regions corresponding to the quoted counts, and sets the mutually different determination criteria therein. Thus, the already-read determination apparatus 10 sets the determination criteria taking account of the quoted counts in the individual regions, thereby making it feasible to determine whether or not the user reads the mail with the transmission and the reception being repeated a plural number of times.

### [Example 5]

The Example 5 assumes that the determination target document is a mail containing a forwarded text. When a content of a forwarded region including the forwarded text is coincident with a text written in the mail transmitted and received by the user in the past, this region can be determined to be the already-read region and can therefore be read faster than when not coincident with the text written in the mail transmitted and received by the user in the past. Accordingly, the already-read determination apparatus 10 sets, for the forwarded region with the content being coincident with the text written in the mail transmitted and received by the user in the past, a higher character reading speed than that of the forwarded region with the content being coincident with the text written in the mail transmitted and received by the user in the past as the determination criterion. Hence, the predictive read time of the forwarded region with the content being coincident with the text written in the mail transmitted and received by the user in the past, is shorter than the predictive read time of the forwarded region with the content not being coincident with the text written in the mail transmitted and received by the user in the past. The already-read determination apparatus 10 sets the determination criterion taking account of whether the forwarded region is the already-read region or not, and predicts the read time, thereby enabling a more precise determination to be made as to whether the whole document is already read or not.

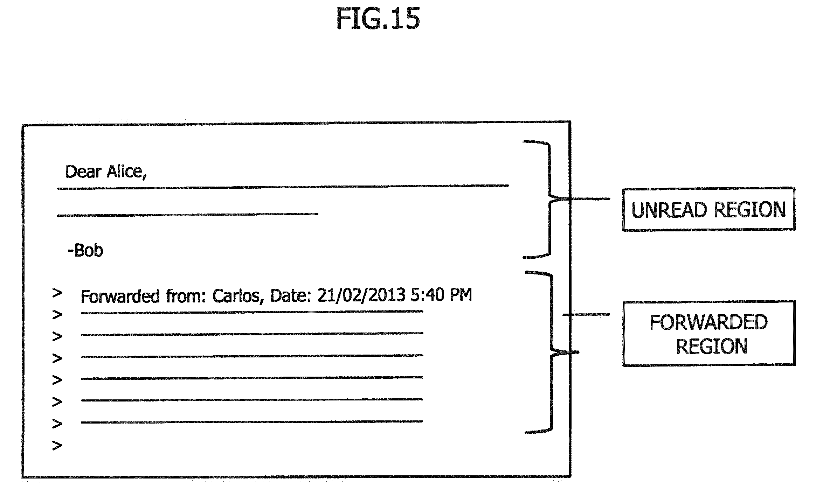

The Example 5 exemplifies a case of, with respect to the mail received by the user, setting the determination criterion being different depending on whether or not the forwarded region is coincident with the text of the mail transmitted and received by the user in the past. The forwarded region can be distinguished from other regions when the header information of this region contains a word "Forwarded" or when the quoted symbol is attached to the line head of each line. FIG. 15 is a diagram illustrating an example of classifying the mail text into the unread region and the forwarded region. In FIG. 15, the first region has no quoted symbol attached to the line head and is therefore determined as the unread region. The second region has the word "Forwarded" contained in the header information and the quoted symbol ">" attached to each line head, and is therefore determined to be the forwarded region. In the Example 5, the determination target document may be, though being assumed to be a mail document, posting to, e.g., SNS (Social Networking Service) or may be a comment to the posting. The already-read determination apparatus 10 deems that the quoted portion containing the past posting or comment as a quotation corresponds to the forwarded region in the mail document, and can determine, similarly to the mail document, whether the posting or the comment to the SNS is read or not. Note that a hardware configuration and processing blocks in the Example 5 are the same as those in the Example 1, and hence the descriptions thereof are omitted.

### <Operational example>

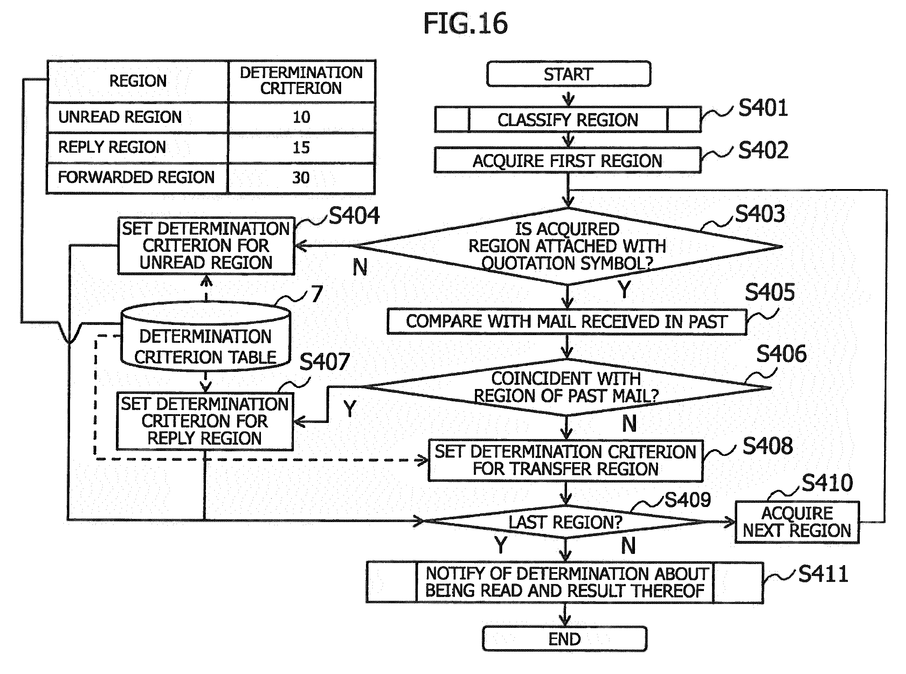

FIG. 16 is a diagram illustrating one example of a flowchart of processes of setting, for each of the classified regions, the determination criterion taking account of whether the forwarded region is the already-read region or not, and determining whether the document is read by the user or not. A start of the processes in FIG. 16 is triggered by, e.g., displaying the already-read determination target document on the output device 14.

A process in S401 is the same as the process in S01 of FIG. 5, and hence its description is omitted. The already-read determination apparatus 10 performs the processes in S402 through S410 by using the determination criterion setting unit 2. A process in S402 is the same as the process in S02 of FIG. 5, and hence its description is omitted.

In S403, the determination criterion setting unit 2 determines whether or not the quoted symbol is attached to each of the line heads of the acquired region, and the processing is shifted to S405 when the quoted symbol is attached but is shifted to S404 whereas when the quoted symbol is not attached. Herein, the determination about whether the region is the forwarded region or not is made based on whether the quoted symbol is attached to each line head or not, and may also be made from the header information of the acquired region. In S404, the determination criterion setting unit 2 sets, for the acquired region, the determination criterion for the unread region. To be specific, the determination criterion setting unit 2 refers to determination criterion table 7 and sets, for the acquired region, the character reading speed "10" (characters/sec) as the determination criterion for the unread region, and the processing is shifted to S409. In S405, the determination criterion setting unit 2 compares contents of the acquired region with contents of the mail received in the past. Herein, the mail received in the past may also be a mail managed and saved by mail software. Further, when the determination target document is the posting to the SNS or the comment to the posting, it may be sufficient that the determination criterion setting unit 2 compares the contents of the acquired region with the past posting or the past comment managed and saved by SNS application software. Next, the determination criterion setting unit 2 shifts the processing to S406. In S406, the determination criterion setting unit 2 determines whether or not the contents of the acquired region are coincident with the contents of the region contained in the mail received in the past, and the processing is shifted to S407 when coincident therewith but is shifted to S408 whereas when not coincident therewith. In S407, the determination criterion setting unit 2 sets, for the acquired region, a determination criterion for a reply region. The reply region is a region containing a description of the contents of the mail of the sender and can be therefore read faster than the unread region. Accordingly, to be concrete, the determination criterion setting unit 2 refers to determination criterion table 7 and sets, for the acquired region, a higher character reading speed "15" (characters/sec) than that of the unread region as the determination criterion for the reply region, and the processing is shifted to S409. In S408, the determination criterion setting unit 2 sets, for the acquired region, the determination criterion for the forwarded region. The forwarded region is the region containing the mail forwarded by the sender concerned, the mail being transmitted by another sender. Hence, it may be sufficient that the determination criterion setting unit 2 sets, for the forwarded region, the same character reading speed as that of the unread region. Specifically, the determination criterion setting unit 2 refers to determination criterion table 7 and sets, for the acquired region, the same character reading speed "10" (characters/sec) as that of the unread region by way of the determination criterion for the forwarded region, and the processing is shifted to S409. In S409, the determination criterion setting unit 2 determines whether or not the acquired region is the last region within the document, and the processing is shifted to S411 when being the last region but is shifted to S410 whereas when not being the last region. In S410, the determination criterion setting unit 2 acquires the region next to the acquired region, and the processing is looped back to S403. In S411, the already-read determination apparatus 10 makes the determination of the determination target document being read, and displays a result of the determination on the output device 14, resulting in an end of the processing. The process in S411 is exemplified by the processes in FIGS. 8A through 8C described in the Example1. Based on the premise of the processes in S406, S408 that are performed by the determination criterion setting unit 2, the processes in OP03-OP04 of FIG. 6 by the read time prediction unit 3 are given by way of one example of setting a shorter period of predictive read time when contents of the quoted portion in the document are coincident with contents of a document created in the past, this document being managed by a predetermined application than when not coincident.

In the Example 5, the already-read determination apparatus 10 sets the determination criteria being different depending on whether or not the contents of the forwarded region are coincident with the text written in the mail transmitted and received by the user in the past. For example, the already-read determination apparatus 10 sets the higher character reading speed, i.e., the shorter period of predictive read time when the contents of the quoted portion in the mail document are coincident with the contents of the mail document received in the past than when not coincident therewith. Thus, the already-read determination apparatus 10 sets, for each region, the determination criterion taking account of whether the contents of the forwarded region are already read or not, thereby enabling the more precise determination to be made as to whether the user reads the mail containing the forwarded text.

### [Example 6]

In the Example 6, the already-read determination apparatus 10 sets the determination criterion corresponding to whether or not the user performs a predetermined operation with respect to a predetermined region. For example, the already-read determination apparatus 10 sets an event of whether or not a link destination is read by clicking on a URL (Uniform Resource Locator) as a determination criterion for a region containing the link destination such as the URL. Namely, the already-read determination apparatus 10 determines that the region concerned is read by the user when the user reads the link destination by clicking on the URL. On the other hand, the already-read determination apparatus 10, when unable to detect that the user clicks on the URL, determines that the region concerned remains to be unread by the user. A user's operation may include, e.g., a case of performing an operation of referring to a dictionary about a region containing a foreign language. The user's operation may further include a case of referring to a file about a mail attached with the file.

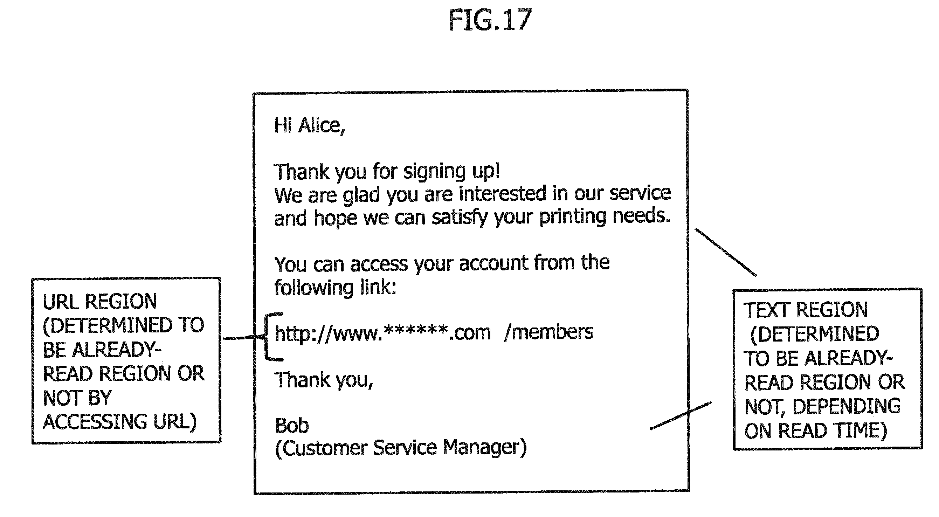

The Example 6 exemplifies a case of setting an event that the user performs the predetermined operation with respect to the predetermined region as the determination criterion. FIG. 17 is a diagram depicting an example of classifying the mail text into a text region and a URL region. In FIG. 17, a first region is the text region and is determined to be the already-read region or not on the basis of the read time thereof. A second region is the URL region indicating the URL and is determined to be the already-read region or not depending on whether the link destination is read by accessing or not. A last region is the text region and is determined to be already-read region or not depending on the read time thereof. Note that a hardware configuration and processing blocks in the Example 6 are the same as those in the Example 1, and hence the descriptions thereof are omitted.

### <Operational Example>

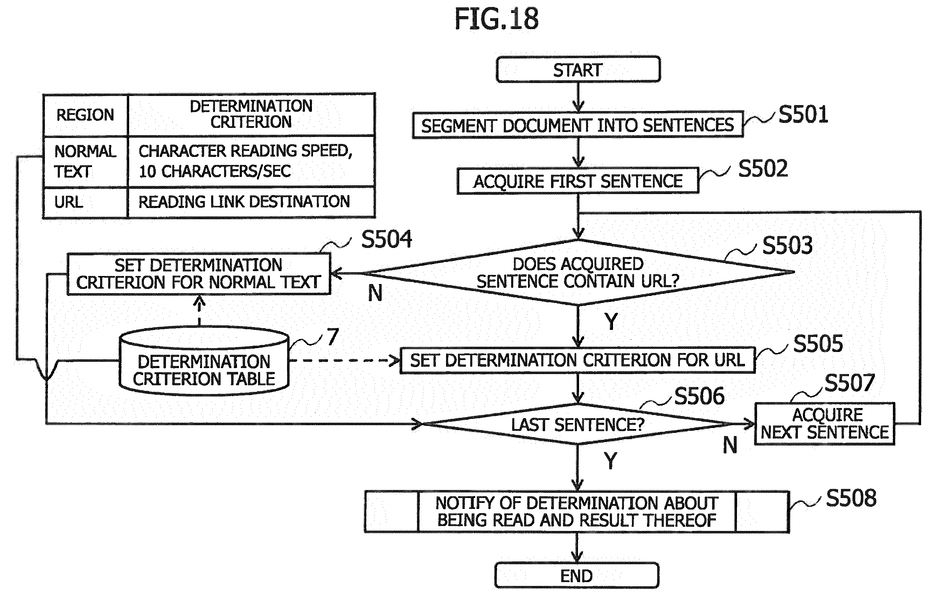

FIG. 18 is a diagram illustrating one example of a flowchart of processes of setting the determination criterion taking account of whether the region is the URL region or not in each of the classified regions, and determining whether the document is already read or not. A start of the processes in FIG. 18 is triggered by, e.g., displaying the already-read determination target document on the output device 14.

In S501, the already-read determination apparatus 10 segments the already-read determination target document into sentences by use of the region classifying unit 1, and the processing is shifted to S502. The region classifying unit 1 executes the process in S501 by way of one example of classifying a document into an already-read region and an unread region.

The already-read determination apparatus 10 implements the processes in S502 through S507 by use of the determination criterion setting unit 2. In S502, the determination criterion setting unit 2 obtains the first sentence of the already-read determination target document, and the processing is shifted to S503. In S503, the determination criterion setting unit 2 determines whether the obtained sentence contains the URL or not, and the processing is shifted to S505 when the URL is contained but is shifted to S504 whereas when the URL is not contained. In S504, the determination criterion setting unit 2 sets, for the obtained sentence, a character reading speed of a normal text as the determination criterion. To be specific, the determination criterion setting unit 2 refers to determination criterion table 7 and sets, for the obtained sentence, a character reading speed "10" (characters/sec) as the determination criterion for the normal text, and the processing is shifted to S506. In S505, the determination criterion setting unit 2 sets, for the obtained sentence, the determination criterion for the URL. Specifically, the determination criterion setting unit 2 refers to determination criterion table 7 and sets, for the obtained sentence, an event of making a determination of being already read when the link destination is read, as the URL determination criterion, and the processing is shifted to S506. In S506, the determination criterion setting unit 2 determines whether or not the obtained sentence is the last sentence within the document, and the processing is shifted to S508 when being the last sentence but is shifted to S507. In S507, the determination criterion setting unit 2 obtains a sentence next to the obtained sentence, and the processing is looped back to S503. In S508, the already-read determination apparatus 10 displays a result of the already-read determination of the already-read determination target document on the output device 14, and the processing comes to an end. The process in S508 includes, e.g., the process of detecting whether or not the user clicks on the URL in addition to the processes illustrated in FIGS. 8A through 8C described in the Example 1 or the processes exemplified in the Examples 2 through 5. Namely, the already-read determination apparatus 10 determines that the region concerned is read by the user when the user reads the link destination by clicking on the URL. While on the other hand, the already-read determination apparatus 10 cannot detect that the user clicks on the URL, in which case it may be sufficient to determine that the region concerned remains to be unread by the user. Based on the premise the processes in S503, S505 by the determination criterion setting unit 2, when the process in S508 by the document already-read determining unit 5 is one example of determining that the document is read by the user when detecting a process that the user tracks a link to another document in the case of the document containing a link to another document.

In the Example 6, the already-read determination apparatus 10 sets the determination criterion corresponding to whether the user performs the predetermined operation for the predetermined region or not. Thus, the already-read determination apparatus 10 can accurately determines whether the user reads or not the document about which the user is assumed to perform the predetermined operation by setting the determination criterion taking account of the user's operation for the predetermined region, e.g., the operation of clicking on the URL.

### [Example 7]

The Example 7 exemplifies a case in which the already-read determination apparatus 10, when determining that the already-read determination target document is read and even when another related document such as a mail of a quoted source of the document concerned is not yet read, deems that this another related document will have already been read, and thus determines whether another related document is read or not. Note that a hardware configuration and processing blocks in the Example 7 are the same as those in the Example 1, and hence the descriptions thereof are omitted.

### <Operational Example>

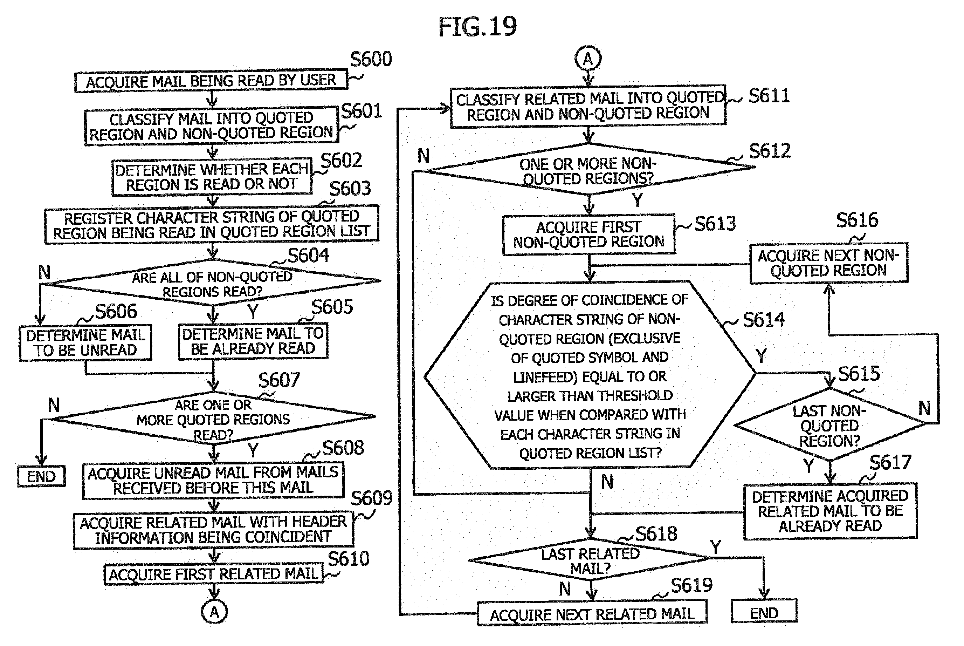

FIG. 19 is a diagram illustrating one example of a flowchart of processes of determining, when determining that one mail (a first mail) is read, whether another mail (a second mail) related to the mail being determined to be read is read or not. For example, an assumption is a case of the first mail containing the quoted region and the non-quoted region as well as being such a case that contents of the quoted region of the first mail are coincident with contents of the non-quoted region of the second mail. Then, another case is assumed, in which the user reads both of the quoted region and the non-quoted region of the first mail. Subsequently, such a case is considered that the user reads the first mail in advance of the second mail. In this case, when the user reads the quoted region of the first mail, it follows that the non-quoted region of the second mail having the same contents as those of the quoted region of the first mail is already read. Such being the case, in the Example 7, the already-read determination apparatus 10, when determining that the user reads both of the quoted region and the non-quoted region of the first mail, deems the non-quoted region of the second mail to be the already-read region, and executes a process of determining whether the user reads the second mail or not. A start of the processes in FIG. 19 is triggered by, e.g., the user's causing the already-read determination target document to be displayed on the output device 14.

In S600, the already-read determination apparatus 10 obtains a mail being read by the user as the already-read determination target document, and the processing is shifted to S601. In S601, the already-read determination apparatus 10 classifies the obtained mail into the quoted region and the non-quoted region by use of the region classifying unit 1, and the processing is shifted to S602. The region classifying unit 1 executes the process in S601 by way of one example of classifying the document into the already-read region and the unread region.

In S602, the already-read determination apparatus 10 determines whether the respective regions of the obtained mail are read by the user or not, and the processing is shifted to S603. In S603, the already-read determination apparatus 10 stores, e.g., in the auxiliary storage device 15, character strings of the respective quoted regions being determined to be read by the user in S602 as a quoted region list, and the processing is shifted to S604. In S604, the already-read determination apparatus 10 determines whether all of the non-quoted regions are read by the user or not, and the processing is shifted to S605 when all of the non-quoted regions are already read but is shifted to S606 whereas when all of the non-quoted regions are not already read. In S605, the already-read determination apparatus 10 determines that the obtained mail is already read, and the processing is shifted to S607. In S606, the already-read determination apparatus 10 determines that obtained mail is not yet read, and the processing is shifted to S607. In S607, the already-read determination apparatus 10 determines, from a result of the determination in the process in S602, whether one or more quoted regions are read by the user or not. The already-read determination apparatus 10 determines that one or more quoted regions are read by the user, the processing is shifted to S608 but comes to an end when there is none of quoted regions being determined to be read by the user.

In S608, the already-read determination apparatus 10 obtains an unread mail from within the mails received before the obtained mail, and the processing is shifted to S609. In S609, the already-read determination apparatus 10 obtains the mail, of which the header information such as a subject of the mail is coincident therewith, from within the mails obtained in S608, and the processing is shifted to S610. In S610, the already-read determination apparatus 10 obtains a first related mail from within the mails (which will hereinafter be termed related mails) obtained in S609, and the processing is shifted to S611. For example, in the Example 7, the related mail can be said to be another mail being unread when the user reads one mail. In S611, the already-read determination apparatus 10 classifies the obtained related mail into the quoted region and the non-quoted region by using the region classifying unit 1, and the processing is shifted to S612. In S612, the already-read determination apparatus 10 determines whether or not the obtained related mail contains one or more non-quoted regions, and the processing is shifted to S613 when containing one or more non-quoted regions but is shifted to S618 (S617) whereas when not containing non-quoted regions. In S613, the already-read determination apparatus 10 obtains a first non-quoted region of the obtained related mail, and the processing is shifted to S614. In S614, the already-read determination apparatus 10 compares the respective character strings in the quoted region list stored in the auxiliary storage device 15 in S603 with the non-quoted region obtained in S613, and determines whether or not the quoted region list contains the character strings of which a degree of coincidence with the character strings of the non-quoted region is equal to or larger than a threshold value, and the processing is shifted to S615 when containing such character strings but is shifted to S618 when not containing. In S615, the already-read determination apparatus 10 determines whether or not the obtained non-quoted region is the last non-quoted region within the related mail, and the processing is shifted to S617 when being the last non-quoted region but is shifted back to S616 whereas when not being the last non-quoted region. In S616, the already-read determination apparatus 10 obtains a non-quoted region next to the obtained non-quoted region, and the processing is shifted back to S614. In S617, the already-read determination apparatus 10 determines that the obtained related mail is already read. For example, it may be sufficient that the document already-read determining unit 5 determines whether the reference time of the reading target region is equal to or longer than the predictive read time or not by use of the predictive read time of the already-read region similarly to the quoted portion also with respect to the non-quoted portion of the related mail. Then, the already-read determination apparatus 10 shifts the processing to S618. The process in S617 by the document already-read determining unit 5 is one example of, in such a case that a first document contains the quoted portion and the non-quoted portion, and that a degree of coincidence between the quoted portion of the first document and the non-quoted portion of a second document is equal to or larger than a predetermined degree, determining whether a second document is read or not by deeming the non-quoted portion of the second document as the quoted portion when determining that the first document is read. In S618, the already-read determination apparatus 10 determines whether or not the obtained related mail is the last related mail in the related mails obtained in S609, and the processing comes to an end when being the last related mail but is shifted to S619 whereas when not being the last related mail. In S619, the already-read determination apparatus 10 obtains a related mail next to the previously obtained related mail, and the processing is looped back to S611.

In the Example 7, the already-read determination apparatus 10 deals with the unread related mail as the already-read mail when determining that one mail is read, and determines whether the unread related mail is read or not by use of the predictive read time of the already-read region. The already-read determination apparatus 10 is thereby enabled to determine more accurately whether the related document in addition to one determination target document is read or not.

### <Other Modified Examples>

Note that the processes in the Examples 1 - 7 can be applied to general documents that are convenient to the confirmation of being read such as the documents transferred and received via, e.g., a work flow in addition to the documents of the mails. For instance, similarly to the related mail described in the Example 7, when the user reads one document, the processes in the Example 7 can be applied to the document being unread by the user in the work flow.

### [Example 8]

In the Examples 1 through 7 described above, the region classifying unit 1 classifies the document into the already-read region, the unread region, etc. in a way that depends on whether the quoted symbol is attached to the line head of the document or not. The already-read region is defined as, e.g., the quoted portion having the quoted symbol transmitted by the user himself or herself in the document. Further, the already-read region is also defined as, e.g., the quoted portion coincident with the contents of the mail in the past. Still further, the already-read region is defined as, e.g., the quoted portion attached with the quoted symbol, in which the sender of the header information is coincident with the present user trying to read the document. Hence, according to another aspect, the Examples 1 - 7 described above can be said to be the Examples configured such that the already-read determination apparatus 10 classifies the document into the quoted portion and the non-quoted portion and determines based on the reference time of the user to each portion whether the user reads the document or not. This being the case, in the Example 8, the Examples 1 - 7 described above will be described according to another aspect, i.e., in terms of classifying the document into the quoted portion and the non-quoted portion. Accordingly, the following Example 8 can be said to be an Example encompassing the contents of the Examples 1 through 7. Such being the case, the components described in the Examples 1 - 7 are referred to by using the same numerals and symbols also in the Example 8.

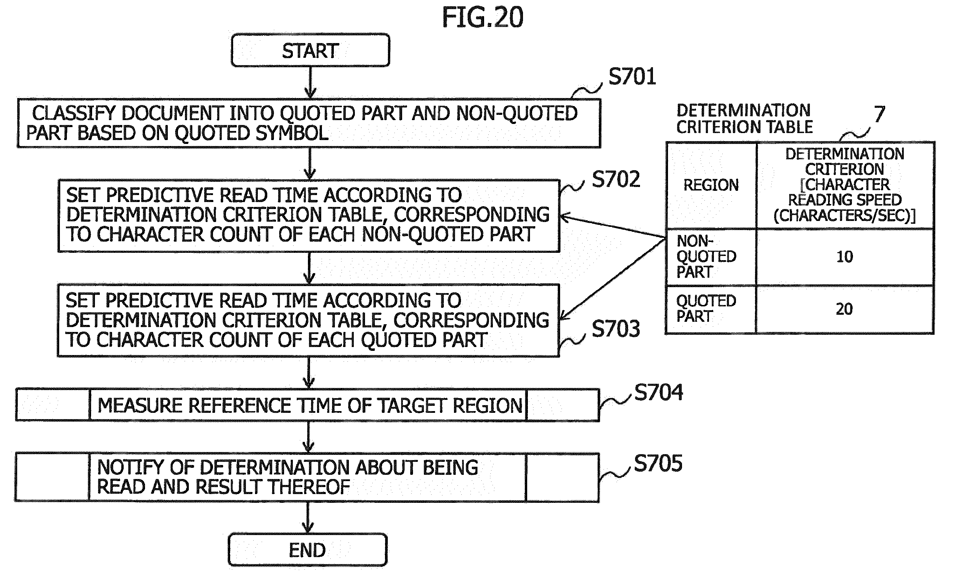

FIG. 20 is a diagram illustrating one example of a flowchart of processes of the already-read determination apparatus 10 according to the Example 8. In these processes, the region classifying unit 1 of the already-read determination apparatus 10 classifies the document into the quoted portion and the non-quoted portion on the basis of the quoted symbol (S701). In the process in S701, however, the region classifying unit 1 may classify, based on the header information, the document into the quoted portion and the non-quoted portion as in FIG. 10 and into the forwarded region and the reply region as in FIG. 16. In other words, the region classifying unit 1 may classify, e.g., even the portion attached with the quoted symbol as the non-quoted portion when an address of the present user is not coincident with an address of the sender. Moreover, the region classifying unit 1 may further classify an adjacent quoted portion based on the character count of the non-quoted region as in FIG. 12, may classify the quoted portion corresponding to the quoted count as in FIG. 14, or may classify the quoted portion into the forwarded region and the reply region as in FIG. 16.

Then, the read time prediction unit 3 of the already-read determination apparatus 10 sets the predictive read time according to the determination criterion table 7 in a way that corresponds to the character count of each non-quoted portion (S702). To be specific, the read time prediction unit 3 sets, for the non-quoted portion, the predictive read time longer than that of the quoted portion. Herein, the character count is one example of an information quantity. Note that the read time prediction unit 3, similarly to the Examples 1 - 7, may execute the process in S702 according to the determination criterion set by the determination criterion setting unit 2. For example, in the process in S702, the read time prediction unit 3 may set, as the non-quoted portion, such a portion that the sender is coincident with the present user on the basis of the header information as in FIG. 10. Moreover, the region classifying unit 1 may deal with the forwarded region as the non-quoted portion as in FIG. 16.

Furthermore, the read time prediction unit 3 of the already-read determination apparatus 10 sets the predictive read time according to the determination criterion table 7 in a way that corresponds to the character count of each quoted portion (S703). Specifically, the read time prediction unit 3 sets, for the quoted portion, the predictive read time shorter than that of the non-quoted portion. Note that the read time prediction unit 3, similarly to the Examples 1 through 7, may execute the process in S703 according to the determination criterion set by the determination criterion setting unit 2. For example, in the process in S703, the read time prediction unit 3 may set the predictive read time by use of a different character reading speed through the classification of the quoted region based on the header information as in FIG. 10. Moreover, the read time prediction unit 3 may set the predictive read time through using the different character reading speed based on the character count of the non-quoted region as in FIG. 12, using the different character reading speed corresponding to the quoted count as in FIG. 14, or using the different character reading speed on the basis of the forwarded region and the reply region as in FIG. 16.

Then, the reference time measuring unit 4 of the already-read determination apparatus 10 measures, similarly to the Examples 1 through 7, the reference time of the reading target region (S704). However, when the document is the file, the already-read determination apparatus 10 may set, as the reference time, a period of time for which the file is opened and displayed on the screen, a period of time for which the document portion is displayed on the screen and a period of time for which the document portion is scrolled. Moreover, the document already-read determining unit 5 of the already-read determination apparatus 10, in the same procedures as those in the Examples 1 through 7, determines that the document is read by the user and notifies of the result on the basis of the predictive read time and the measured result of the reference time of the user (S704). Note that in the determination in S704, the document already-read determining unit 5 may determine whether the document is read or not depending on the detection as to whether or not the user performs the predetermined operation similarly to the Example 6 for the document etc. containing the link as in, e.g., FIG. 17 in addition to the determination based on the predictive read time and the measurement result of the reference time of the user. Further, with respect to the mail documents, e.g., as in FIG. 19, the document already-read determining unit 5, when one mail document is read, deems that a portion containing the mail document of the related mail becomes the quoted portion, and may determine whether the document of the related mail is read or not.

As discussed above, according to the Example 8, the already-read determination apparatus 10 sets the predictive read time for the respective portions by way of the character count of the non-quoted portion and the character count of the quoted portion in the document. Then, the already-read determination apparatus 10 determines based on the predictive read time of each portion and the measurement result of the reference time of the user that the user reads the document, and notifies of the result thereof. Accordingly, the already-read determination apparatus 10 in the Example 8 can, similarly to the Examples 1 through 7, determine whether the user reads the document or not with the higher accuracy than hitherto. This is because, specifically, the already-read determination apparatus 10 determines that the user reads the document even when the read time of the document having a large quantity of information of the quoted portion is shorter than the read time of the document containing a small proportion of the quoted portion. This is because, conversely, the already-read determination apparatus 10 does not, when the read time of the document having the large quantity of information of the non-quoted portion is longer than the read time of the document containing a small proportion of the non-quoted portion, determine that the user reads the document. Further, the already-read determination apparatus 10 determines whether or not even a quoted portion attached with the same quoted symbol is a portion created by the user himself or herself, thereby enabling the determination about whether the user reads the document or not, to be made with the higher accuracy than hitherto. It is because the user can read the portion created by the user himself or herself faster than other portions, and it is desirable to deal with the quoted portion created by another person in the same way as dealing with the unread portion. Moreover, the determination as to whether or not the user reads the document can be made with the higher accuracy than hitherto by determining the quoted count of even the quoted portion attached with the same quoted symbol.

The already-read determination apparatus, the already-read determination method and the already-read determination program are capable of reducing the erroneous determination when determining whether the document is read or not.

In any of the above aspects, the various features may be implemented in hardware, or as software modules running on one or more processors. Features of one aspect may be applied to any of the other aspects.

As stated above, the invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. An already-read determination apparatus comprising:
a read time prediction unit configured to set predictive read time of a quoted portion in a document and predictive read time of a non-quoted portion in the document on the basis of an information quantity of the quoted portion and an information quantity of a non-quoted portion respectively;
a reference time measuring unit configured to measure periods of reference time for which a user refers to the quoted portion and the non-quoted portion respectively; and
a determining unit configured to determine that the document is read by the user when the predictive read time of each portion and the reference time satisfy predetermined conditions.

2. The already-read determination apparatus according to claim 1, wherein the quoted portion is attached with information indicating a user creating the quoted portion, and
the read time prediction unit is configured to set a shorter period of predictive read time when the user creating a quoted portion is identified with the user referring to the quoted portion than when not identified.

3. The already-read determination apparatus according to claim 1 or 2, wherein the read time prediction unit is configured to set a longer period of predictive read time for the quoted portion adjacent to the non-quoted portion when an information quantity of the non-quoted portion is smaller than a predetermined reference value than when the information quantity of the non-quoted portion is equal to or larger than the predetermined reference value.

4. The already-read determination apparatus according to any of claims 1 to 3, wherein the read time prediction unit is configured to set a different period of predictive read time corresponding to a quoted count indicated by symbols when the quoted portion is attached with the symbols indicating a plural number of quotations.

5. The already-read determination apparatus according to any of claims 1 to 4, wherein the read time prediction unit is configured to set a shorter period of predictive read time when contents of the quoted portion in the document are coincident with contents of a document created in the past, the document being managed by a predetermined application, than when not coincident.

6. The already-read determination apparatus according to any of claims 1 to 5, wherein the determining unit is configured to determine that the document is read by the user when detecting a process that the user tracks, in the case of the document containing a link to another document, the link to another document.

7. The already-read determination apparatus according to any of claims 1 to 6, wherein the determining unit, in such a case that a first document contains the quoted portion and the non-quoted portion, and that a degree of coincidence between the quoted portion of the first document and the non-quoted portion of a second document is equal to or larger than a predetermined degree, is configured to determine whether a second document is read or not by deeming the non-quoted portion of the second document as the quoted portion when determining that the first document is read.

8. The already-read determination apparatus according to any of claims 1 to 7, further comprising a line-of-sight detection unit configured to detect a position of a line of sight of the user,
wherein the reference time measuring unit is configured to measure, as the reference time of the quoted portion or the non-quoted portion, a period of time for which the position of the line of sight detected by the line-of-sight detection unit is contained in the quoted portion or the non-quoted portion.

9. An already-read determination method comprising:
setting predictive read time of a quoted portion in a document and predictive read time of a non-quoted portion in the document on the basis of an information quantity of the quoted portion and an information quantity of a non-quoted portion respectively;
measuring periods of reference time for which a user refers to the quoted portion and the non-quoted portion respectively; and
determining that the document is read by the user when the predictive read time of each portion and the reference time satisfy predetermined conditions.

10. An already-read determination program to make a computer execute:
setting predictive read time of a quoted portion in a document and predictive read time of a non-quoted portion in the document on the basis of an information quantity of the quoted portion and an information quantity of a non-quoted portion respectively;
measuring periods of reference time for which a user refers to the quoted portion and the non-quoted portion respectively; and
determining that the document is read by the user when the predictive read time of each portion and the reference time satisfy predetermined conditions.
